Europäisches Patentamt

(19) European Patent Office

Office européen des brevets

(11) **EP 0 942 603 A2**

## (12) EUROPEAN PATENT APPLICATION

(43) Date of publication:
**15.09.1999 Bulletin 1999/37**

(51) Int. Cl.$^6$: **H04N 7/24**

(21) Application number: **99301761.5**

(22) Date of filing: **09.03.1999**

(84) Designated Contracting States:
**AT BE CH CY DE DK ES FI FR GB GR IE IT LI LU
MC NL PT SE**
Designated Extension States:
**AL LT LV MK RO SI**

(30) Priority: **09.03.1998 JP 05712198**

(71) Applicant: SONY CORPORATION
Tokyo 141 (JP)

(72) Inventor:
**Kitamura, Takuya,
Intellectual Property Department
Shinagawa-ku, Tokyo 141 (JP)**

(74) Representative:
**Horner, David Richard et al
D Young & Co,
21 New Fetter Lane
London EC4A 1DA (GB)**

(54) **Video splicing apparatus and video splicing method**

(57) A video splicing apparatus is provided for receiving a transport stream including a plurality of packetized encoded video data streams, and for splicing the encoded video data streams to generate a spliced video data stream. The video splicing apparatus includes an input processor for disassembling each of the plurality of packetized encoded video data streams in the transport stream into a pseudo-elementary stream before packetization, and for storing the disassembled pseudo-elementary streams in predetermined storage. An analyzer is also provided for analyzing the amount of coded bits of two data streams of the pseudo-elementary streams stored in the storage that will be generated upon decoding upon receipt of the two data streams to be subjected to a splicing operation. A data processor is provided for reading the data streams to be subjected to the splicing operation from the storage, splicing the streams, and inserting a desired amount of additional data at a splice point based on the result of the analysis by said analyzer to produce a spliced video data stream and storing the spliced video data stream in the storage. An output processor is provided for determining output timing for the spliced video data stream based on the determined amount of coded bits, and outputting the spliced video data stream read from the storage based on the output timing.

FIG. 6

EP 0 942 603 A2

Description

BACKGROUND OF THE INVENTION

The present invention relates generally to a video splicing apparatus and a video splicing method and more particularly to a video splicing apparatus and a video splicing method that are particularly suitable for switching and connecting packetized encoded video data streams, for example transport stream (TS) packetized video data.

A variety of compression encoding schemes have been proposed as techniques for reducing the amount of information necessary to encode and represent video images and audio information associated therewith. A representative one of such compression encoding schemes is called Moving Picture Experts Group Phase 2 (MPEG2) that has been standardized by institutes such as the International Organization for Standardization (ISO) and so on. The MPEG2 compression encoding scheme has been standardized for purposes of transmitting video and audio data, and includes separate standards for video and audio data, respectively.

Digital broadcasting systems have recently been devised for compression encoding video and audio data using the MPEG2 compression encoding scheme to transmit broadcast compression encoded data using ground or satellite waves. In operation, such a digital broadcasting system packetizes encoded video data and associated audio data for every predetermined block of data for transmission, and transmits a resulting sequence of packets in a transport stream. (The packet sequence is hereinafter referred to as the "transport stream" and each packet forming the transport stream is hereinafter referred to as a transport stream (TS) packet).

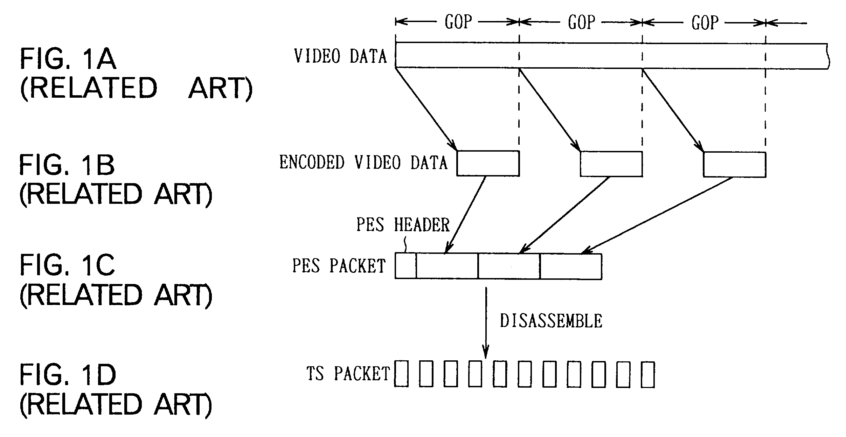

Making reference first to Figs. 1A to 1D, the relationship between video data, audio data and TS packets will be explained. While a description of only the video data will be given, the same basic concept is applicable to both video and audio data. As is shown in Figs. 1A and 1B, in accordance with the MPEG2 compression encoding scheme, several consecutive pictures are defined as one group of pictures (GOP), such that video data is compression encoded in units of GOP. At least one of the pictures in each GOP is defined as an I-picture and is compression encoded by intra-frame encoding, while each remaining picture is defined as either a P-picture and is compression encoded by inter-frame predictive encoding from the I-picture or another P-picture; or a B-picture and is compression encoded by bi-directional inter-frame predictive encoding from either I, P or B-pictures located before and after the B-picture.

A plurality of encoded video data in GOP units are generally referred to as an "elementary stream (ES)" because this combination of encoded video data represents a material data element. As illustrated in Figs. 1B and 1C, the encoded video data GOPs are collected and placed in consecutive locations. A header is added at the head of the collection of the encoded video data GOPs to form a packetized elementary stream (PES). As is further illustrated in Figs. 1C and 1D, the PES is divided every 184 bytes, and a 4-byte header is added to the head of each divided 184 byte packet. In this manner, the PES is transformed into a plurality of TS packets for transmission, the TS packets including the video data.

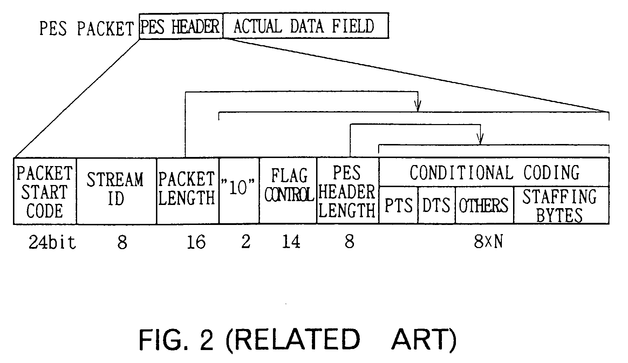

As is illustrated in Fig. 2, a header provided with each of the PES packets comprises a 24-bit packet start code indicative of the start of the PES packet; an 8-bit stream ID indicative of the type of data stream contained in a data portion of the PES packet (for example, the type such as video, audio, or the like); a 16-bit packet length indicator that is indicative of the length of subsequent data portion; code data set to the value "10"; a 14-bit flag control field for storing a variety of flag information; an 8-bit PES header length variable indicative of the length of data in a following conditional coding field; and a variable-length conditional coding field for storing time management information such as timing information for use during reproduction and output called a presentation time stamp (PTS), time management information used during decoding called a decoding time stamp (DTS), other time management data, and stuffing bytes, as necessary, for adjusting the amount of data or the like.

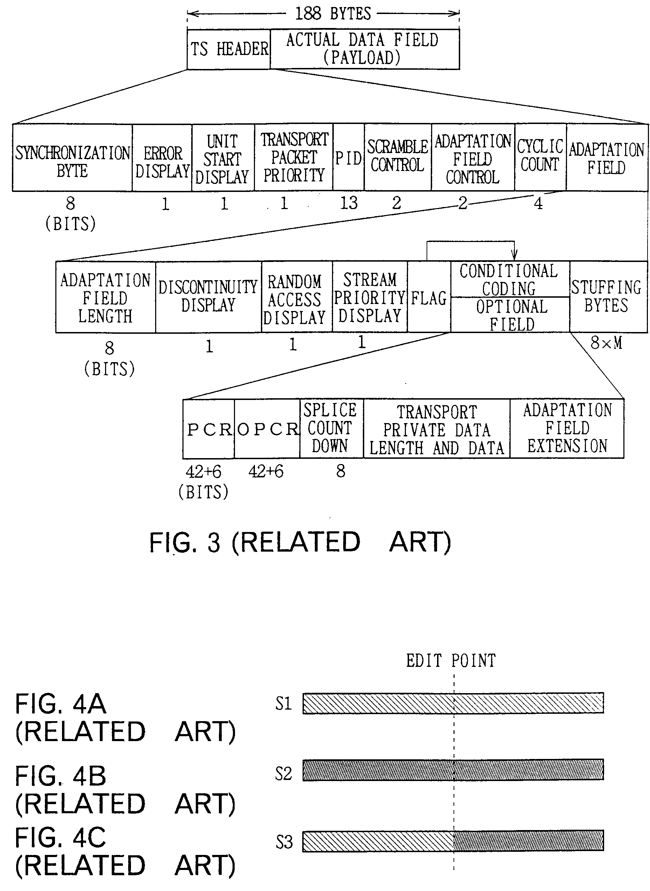

Referring next to Fig. 3, the 4-byte header of each TS packet comprises an 8-bit synchronization byte indicative of the start of the TS packet; an error display field indicative of the presence or absence of bit errors in the packet (error indicator field); a unit start display field indicative of whether or not the head of a PES packet exists in this TS packet; a transport packet priority field indicative of relative significance of this TS packet; a PID field for storing packet identification information (PID) indicative of the type of data stream contained in a payload field of this TS packet; a scramble control field indicative of whether or not the data stream contained in the payload field is scrambled; an adaptation field control field indicative of whether or not an adaptation field area and a payload area exist in this TS packet; and a cyclic counter field for storing cyclic counter information indicative of whether or not a TS packet having the same packet identification information PID has been discarded.

An adaptation field area for storing a variety of additional control information is also provided. The adaptation field area in turn includes an adaptation field length field area indicative of the length of the adaptation field area itself; a discontinuity display field indicative of whether or not timing information is to be reset in a TS packet of the same data stream subsequent to this TS packet; a random access display field indicative of whether or not this TS packet is an entry point for random access display of the data stream; a stream priority display field indicative of whether or not the payload area of this TS packet contains a significant portion of a data stream; a flag control field for storing flag information related to a conditional coding field; a conditional coding field for storing various reference time information including a program clock reference (PCR) and an original program clock reference (OPCR), information such as a splice count down indicative of the number of bytes until a data exchange point; a transport data length indication, and an adaption field extension indicative of whether additional adaption field information is to be provided; and a stuffing byte field including a plurality of stuffing bytes, as necessary, for adjusting the amount of data.

When transmitting data compression encoded information employing the MPEG2 compression encoding scheme, because data to be transmitted is transformed into TS packets for transmission, as mentioned above, TS packets generated from other data may be multiplexed with the original generated TS data to be transmitted, and the combined data stream may be transmitted in a multiplexed manner. For this reason, a digital broadcasting system first compression encodes video and associated audio data of respective programs in accordance with the MPEG2 compression encoding scheme, then transforms this compression encoded data into TS packets, and finally multiplexes these TS packets with TS packets including data from other programs so that a plurality of programs can be broadcast through one line.

When a plurality of programs are multiplexed together and are transmitted on a single line, a receiver that receives such a multiplexed data stream must extract and decode the TS packets containing video and audio data of a single viewer desired program from all of the multiplexed TS packets sent in the single multiplexed data stream. In order to properly perform this process, the digital broadcasting system also transforms various program information, including a program association table (PAT) and a program map table (PMT), into TS packets which are then multiplexed and transmitted with the stream of TS packets associated with video and audio data, as described above.

The program information PMT includes packet identification information PID for each broadcast program information indicative of which of the TS packets contain video data and audio data forming part of a particular program. For example, for a program number "X", video data associated with this program number is identified with packet identification information PID "XV" and audio data associated with this program number is identified with packet identification information PID "XA." Because program information PMT is provided for each program that is multiplexed together and transported in one multiplexed data stream, the number of program information PMT is equal to the number of programs multiplexed in a single multiplexed transport stream.

The program information PAT includes packet identification information PID for each of the broadcast programs indicative of which of the TS packets stores program information PMT for each program. For example, a TS packet storing program information PMT associated with program number "0" is identified by packet identification information PID "AA," and a TS packet storing program information PMT associated with program number "1" is identified by identification information PID "BB." A TS packet which contains the program information PAT is additionally provided with predetermined packet identification information PID.

When a receiving apparatus employed by a viewer receives a multiplexed transport stream having a plurality of programs multiplexed therein and a desired program is to be displayed, the viewer first receives at the receiver a TS packet which contains the program information PAT. The receiver extracts the TS packet to acquire the program information PAT. Then, the receiver employed by the viewer references the acquired program information PAT to determine which of a plurality of TS packets contains the program information PMT of the desired program and to allow the receiver to acquire the program information PMT of the desired program. The receiver thus extracts the program information PMT of the desired program. Then, the receiver selects the TS packets that contain video data and audio data of the desired program from the TS packet data stream by referencing the acquired program information PMT, to in turn acquire the TS packets containing the actual video and audio data forming the desired program. The acquired video and audio data is then decoded for display. In this manner, the receiver can receive and display any program desired by the viewer even if a plurality of programs are multiplexed together and are transported in a serial manner in a multiplexed transport stream.

According to one aspect of the digital broadcasting system as described above, it is contemplated that a multiplexed transport stream will be received at a local broadcast station, and that advertising video data (so-called CM), for example, will be inserted into video data of a predetermined program within the transport stream. After this insertion procedure is complete, the transport stream with the advertising video data inserted therein is retransmitted. It is also contemplated that additional video data may be spliced to video data of a desired program within a transport stream, prior to final transmission, rather than being inserted within the video data of the desired program to be displayed after the transport stream has been produced at a main broadcasting station. The resulting transport stream is eventually transmitted from the local broadcasting station after the new data has been added thereto. As is illustrated in Figs. 4A to 4C, in order to perform such an editing operation, original video data S1 and video data S2 to be inserted into video data S1 or connected to video data S1 must be switched and connected to produce video data S3 which is intended for final transmission. Such a video editing operation is generally referred to as a "splicing operation."

When baseband video data not subjected to compression encoding is to be spliced, the editing operation can be readily carried out by switching the frame timing between the first and second video data S1, S2 in synchronism. However, if the first and second video data have been compression encoded and then transformed into TS packets as mentioned above, the amount of information used to represent each picture differs from picture to picture. Thus, because the changing points of images are not at equal intervals as is the case of conventional frames, difficulties in performing the splicing operation are caused.

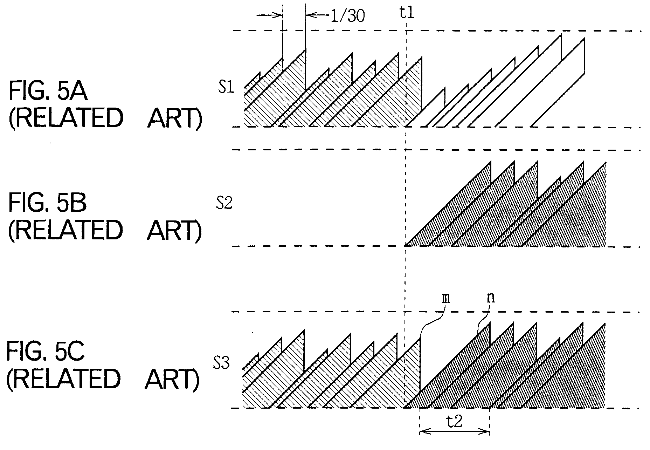

Also, when a TS packetized transport stream is transmitted, the rate of the data transmission is controlled to prevent a video buffering verifier (VBV) buffer of a system target decoder (STD) buffer, provided at an input stage of a receiver, from overflowing or underflowing. Thus, simply switching the data input from the first video data to the second video data may possibly cause the STD buffer to overflow. For example, as illustrated in Figs. 5A to 5C, if the first and second coded video data S1, S2, controlled to prevent the VBV buffer from overflowing, are simply switched at the timing of time point tl to produce the third coded video data stream S3, a time period t2 from the decoding of the last picture m of the first coded video data S1 to the decoding of the first picture n of the second coded video data S2 exceeds 1/30 of a second, thereby causing the temporal relationship between the first and second coded video data S1, S2 to be discontinuous before and after a connection point t1. In addition, if video data is extracted from the STD buffer at intervals of 1/30 seconds in such a discontinuous state the STD buffer will underflow in the near future.

Thus, the use of TS-packetized video data results in a problem that a splicing operation cannot be performed simply by switching video data from a first video data stream to a second video data stream.

It is therefore an object of this invention to provide an improved video splicing apparatus and a method associated therewith that alleviate the drawbacks of the prior art.

## SUMMARY OF THE INVENTION

Particular and preferred aspects of the present invention are set out in the accompanying independent and dependent claims. Features of the dependent claims may be combined with features of the independent claims as appropriate, and in combinations other than those explicitly set out in the claims.

In accordance with an embodiment of the invention, a video editing apparatus is provided for receiving a video data transport stream, including a plurality of packetized encoded video data streams multiplexed together, and for splicing a desired encoded video data stream to the received video data transport stream. The video editing apparatus comprises an input processor for disassembling each of the packetized encoded video data streams of the received video data transport stream into a form similar to an original elementary data stream (before packetization), and for storing each disassembled elementary data stream in predetermined storage. An analyzer is provided for analyzing the amount of coded bits that will be generated upon receipt for each data stream to be spliced to one of the elementary data streams stored in the predetermined storage. A data processor reads the data streams to be spliced to one of the elementary data streams from the predetermined storage. The elementary data stream and the data stream to be spliced to the elementary data stream are spliced and a desired amount of stuffing data is inserted at a splice point based on a result of the analysis by the analyzer, to produce a combined, continuous video data stream. The combined video data stream is then stored in the predetermined storage, and an output timing for the combined video data stream is determined based on the amount of code bits that will be generated upon receipt for the combined video data stream. The combined video data stream is finally read from the predetermined storage and is output based on the determined output timing.

In accordance with embodiments of the invention, respective encoded video data streams within the received video data transport stream are disassembled into their respective original elementary data streams, and are stored in the predetermined storage. The amount of coding bits that will be generated upon receipt for data streams to be spliced to the plurality of elementary data streams is analyzed, and based on the result of this analysis, the streams are spliced together, and a required amount of stuffing data is inserted at a link point to produce a continuous combined video data stream. The combined video data stream is output in accordance with an output timing determined on the basis of the amount of coding bits that will be generated upon receipt of the combined video data stream at a receiver. Thus, in accordance with embodiments of the invention, it is possible to readily carry out data connection/splicing processing even with digital video data which is packetized for transmission, without causing a buffer in a receiver to underflow or overflow, and without causing a discontinuity in the output data.

The apparatus and method of embodiments of the present invention allow for the splicing of TS-packetized video data while avoiding the risk of the production of discontinuous video data, or an underflow or overflow of the STD buffer.

An embodiment of the invention provides an improved video editing apparatus and method that can readily perform a splicing operation of coded digital video data that has been packetized for transmission. In preferred embodiments, the apparatus and method avoid a discontinuity in the output data in the vicinity of the splicing operation. Further, the apparatus and method avoid underflow or overflow of a VBV buffer provided in a system target decoder (STD) buffer.

The invention accordingly comprises the several steps and the relation of one or more of such steps with respect to each of the others, and the apparatus embodying features of construction, combinations of elements and arrangement of parts that are adapted to effect such steps, all as exemplified in the following detailed disclosure, and the scope of the invention will be indicated in the claims.

Still other objects and advantages of the invention will in part be obvious and will in part be apparent from the specification and drawings.

## BRIEF DESCRIPTION OF THE DRAWINGS

The present invention will be described further, by way of example only, with reference to preferred embodiments thereof as illustrated in the accompanying drawings, in which:

Figs. 1A to 1D are schematic diagrams used for explaining the structure of video data and a TS packet employed in a standard apparatus;

Fig. 2 is a schematic diagram illustrating the structure of a PES packet employed in a standard apparatus;

Fig. 3 is a schematic diagram illustrating the structure of a TS packet employed in a standard apparatus;

Figs. 4A to 4C are schematic diagrams used for explaining the concept of a splicing operation employed in a prior art device;

Figs. 5A to 5C are schematic diagrams of an occupancy of a VBV buffer used for explaining a drawback arising from a conventional splicing operation;

Fig. 6 is a block diagram illustrating the configuration of a splicing apparatus constructed in accordance with an embodiment of the invention;

Figs. 7A to 7C are schematic diagrams of an occupancy of a VBV buffer used for explaining a splicing operation in accordance with an embodiment of the invention;

Figs. 8A to 8D are schematic diagrams of data streams used for further explaining the splicing operation in accordance with an embodiment of the invention;

Fig. 9 is a block diagram illustrating the configuration of signal input processor constructed in accordance with an embodiment of the invention;

Fig. 10 is a diagram showing a data structure format when stored in a memory constructed in accordance with an embodiment of the invention;

Fig. 11 is a block diagram illustrating the configuration of a sync detector circuit constructed in accordance with an embodiment of the invention;

Fig. 12 is a schematic diagram showing the structure of a PID lookup table in accordance with an embodiment of the invention;

Fig. 13 is a block diagram illustrating the configuration of a PID lookup table circuit constructed in accordance with an embodiment of the invention;

Fig. 14 is a block diagram illustrating the configuration of a parser unit constructed in accordance with an embodiment of the invention;

Fig. 15 is a block diagram illustrating the configuration of a data link circuit constructed in accordance with an embodiment of the invention;

Fig. 16 is a block diagram illustrating the configuration of an output processor constructed in accordance with an embodiment of the invention;

Fig. 17 is a flow chart illustrating a processing procedure for a splicing operation in accordance with an embodiment of the invention;

Figs. 18A to 18I are timing charts of a processing schedule performed in various circuit elements in accordance with an embodiment of the invention;

Fig. 19 is a diagram depicting the determination of the required blanking and stuffing information required for a splicing operation in accordance with an embodiment of the invention; and

Fig. 20 is a flow chart depicting the procedure to be followed in making the determinations in Fig. 19.

## DETAILED DESCRIPTION OF THE EMBODIMENT

(1) General Configuration of a Splicing Apparatus Constructed in Accordance with an embodiment of the Invention.

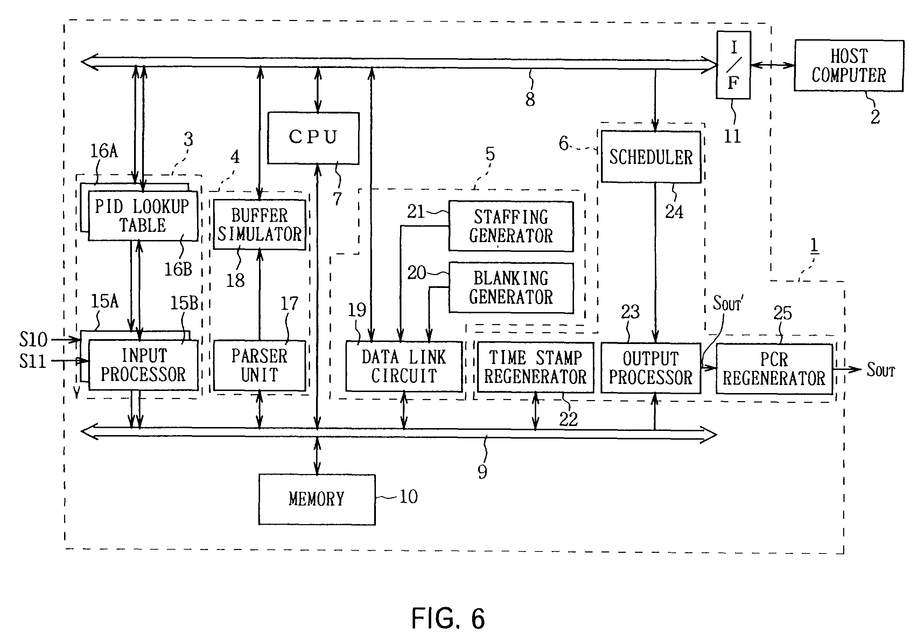

Referring first to Fig. 6, a splicing apparatus 1 is shown. In accordance with an embodiment of the invention, control information is supplied from an external host computer 2, and in accordance therewith, splicing apparatus 1 splices together pre-selected programs from multi-program transport streams S10, S11. Splicing apparatus 1 preferably resides in a main broadcasting station or in a local broadcasting station within a digital broadcasting system and operates to splice together video data of two different programs which have each been previously transformed into transport streams for transmission.

Making further reference to Fig. 6, the principle of a splicing operation performed in splicing apparatus 1 in accordance with an embodiment of the invention will be explained. Assume first that the transport stream S10 is multiplexed with digital video data of three programs A, C, E, while the transport stream S11 is multiplexed with digital video data of three programs B, D, F, and video data DB of program B is to be spliced into video data DA of program A. When transport streams S10, S11 are input to splicing apparatus 1, the splicing apparatus first rearranges and groups respective video data within transport streams S10, S11 for each program based on packet identification information PID included within transport streams S10, S11. The location packet identification information PID for each program in the transport stream may be recognized according to program information PAT and program information PMT also included with each transport stream, as noted above.

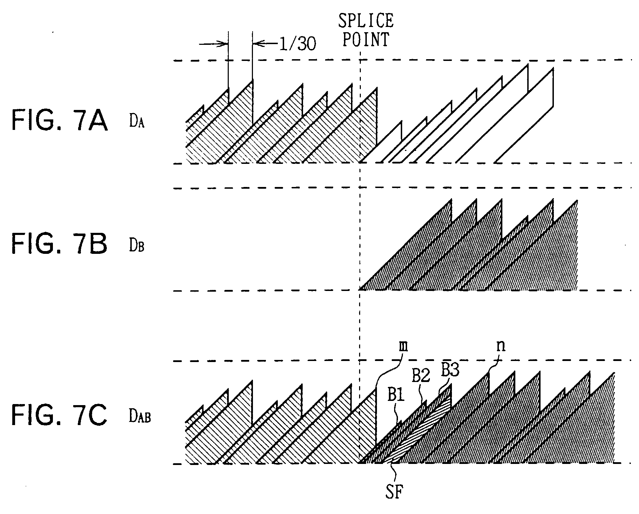

When the video data DA, DB of the programs A, B are spliced together, the video data is controlled so that a VBV buffer in a receiver of the spliced data will not overflow or underflow. As is illustrated in Figs. 7A and 7B, when the video data DA is spliced to the video data DB at time point t1, the video data DA is not simply switched to the video data DB. Rather, as illustrated in Fig. 7C, three blanking pictures B1 to B3 are inserted after the video data DA, and stuffing data SF is inserted to produce a spliced video data DAB such that the video data DA and the video data DB appear continuous before and after the splice point t1. Consequently, when the spliced video data DAB is multiplexed with video data of other programs C, E and transmitted, the VBV buffer at the receiver side of the apparatus will not overflow or underflow as in the prior art apparatus even if the video data DAB is extracted at intervals of 1/30 seconds from the VBV buffer at the receiver. In this example, three blanking pictures are displayed between a last picture m of video data DA and a first picture n of video data DB. Stuffing data SF is mere dummy data for time adjustment, and is discarded by the receiver after the spliced video data DAB is extracted from the VBV buffer at the receiver end.

The video data DA and DB are TS-packetized data multiplexed in the transport streams S10, S11, respectively. If the complete video data DA and DB were each stored in one TS packet, the splicing operation could easily be performed in units of TS packets. Actually, however, since the capacity of a TS packet is small, i.e., 188 bytes, the complete video data DA and DB are each stored over a plurality of TS packets. For this reason, in order to perform the splicing operation in the prior art, it is necessary to completely decode the video data and return the video data to the format of an elementary stream. However, if the video data DA and DB are returned completely to the format of elementary streams, they must be again transformed into TS packets to be output, thus requiring complicated processing. To avoid such difficulties, splicing apparatus 1 of an embodiment of the invention converts the video data DA and DB, formed of TS packets, into data having a format that can be handled as if formed of elementary streams, but that requires far less processing than if the data were actually converted to elementary streams. A processor for performing this data format conversion is shown at input processing unit 3 of Fig. 6.

Referring once again to Fig. 6, explanation of splicing apparatus 1 will be continued. As is illustrated in Fig. 6, splicing apparatus 1 is generally composed of input processing unit 3; a data analysis unit 4; a data processing unit 5; an output processing unit 6; a central processing unit (CPU) 7, acting as a control means; a command bus 8; a data bus 9; a memory 10; and an interface unit 11.

CPU 7 controls the operations of the respective circuit elements (3-6, 10) of splicing apparatus 1. CPU 7 receives a splicing instruction from higher-level external host computer 2 through interface unit 11 and via command bus 8. CPU 7 then issues operation instructions to the respective circuit elements (3-6, 10) based on the received splicing instruction. The operation instructions are provided to the associated circuit elements (3-6, 10) via command data bus 8. In this manner the splicing operation instructed by host computer 2 is carried out. CPU 7 operates based upon an operation program stored in memory 10 to control the operation of these circuit elements. The operation program may be downloaded into memory 10 through host computer 2 from the outside, or input into memory 10 in some other manner, by way of example.

In splicing apparatus 1, the respective circuit elements (3-7) are connected to memory 10 through data bus 9 such that they can write desired data into memory 10 and read desired data from memory 10. Data bus 9 is provided with an arbitration function for arbitrating access rights to data bus 9 so as to prevent a collision of requests for access to memory 10.

Input processing unit 3 performs predetermined input processing on input transport streams S10, S11 supplied thereto from an outside source. These processed input transport streams are then stored in memory 10. Input processing unit 3 is comprised of input processors 15A, 15B, and PID lookup tables 16A, 16B such that the supplied transport streams S10, S11 are received by input processors 15A, 15B, respectively.

Input processor 15A writes respective TS packets of the input transport stream S10 into memory 10, making reference to PID lookup table 16A to rearrange and group transport stream S10 by program in accordance with packet identification information PID contained therein. The respective TS packets in transport stream S10 are then written into memory 10. Input processor 15A performs data format conversion processing and records the respective TS packets that can then be handled as if they were elementary data streams into memory 10, as mentioned above. PID lookup table 16A stores address information for rearranging and grouping the respective TS packets by program in accordance with the packet identification information PID, and writing the rearranged TS packets into memory 10. The address information can be read from PID lookup table 16A with the packet identification information PID used as a key word. In this manner, input processor 15A can access PID lookup table 16A with the packet identification information PID as a key word to retrieve a desired write addresses in memory 10, in order to determine at what location in memory 10 each TS packets is stored.

Input processor 15B and PID lookup table 16B are configured substantially in a similar manner to input processor 15A and PID lookup table 16A, respectively. Input processor 15B writes respective TS packets of the input transport stream S11 into memory 10 with reference to PID lookup table 16B to rearrange transport stream S11 in accordance with packet identification information PID. The respective TS packets in transport stream S11 are then written into memory 10.

Data analysis unit 4 reads out video data DA and DB from memory 10 that are to be subjected to a splicing operation, and then parses the syntax of video data DA and DB, the PES stream and the TS packet stream to retrieve the MPEG, PES and TS parameters. Data analysis unit 4 thus reads a variety of parameters that have been added to the desired TS packets during compression encoding and packetization. Data analysis unit 4 then analyzes the amount of code that will be generated for the video data DA and DB upon reception based on the retrieved parameters.

The data analysis unit 4 comprises a parser unit 17 and a buffer simulator unit 18. Parser unit 17 accesses memory 10 to parse the syntax of the encoded video data DA and DB to be spliced being treated as elementary streams, and the syntax of the PES and TS streams, and extracts a variety of parameters which have been added to the encoded video data and TS packets during compression encoding and packetization. Buffer simulator unit 18 in turn analyses the amount of code that will be generated in the VBV buffer at the receiver when the spliced video data DA and DB are received thereby, based on the parsing results derived by parser unit 17. Data analysis unit 4 can calculate the occupancy of the VBV buffer at the receiver upon the receipt of video data DA and DB from the number of bits of the video data DA and DB and the transport bit-rate of the video data DA and DB. CPU 7 is notified of the result of this analysis. CPU 7, upon receiving the analysis result, determines how the coded video streams should be spliced and formatted in order to prevent the VBV buffer of the receiver from overflowing or underflowing, and notifies data processing unit 8 of this information as a splicing instruction. The analysis result output from buffer simulator unit 18 and the data combination information output by CPU 7 are also supplied to a scheduler circuit 24 in output processing unit 6.

Data processing unit 5 splices the video data DA and DB in response to a splicing instruction from CPU 7. Data processing unit 8 is composed of a data link circuit 19; a blanking generator 20; and a stuffing generator 21. Data link circuit 19, responsive to a data combination instruction from CPU 7, reads the video data DA and DB to be spliced from memory 10, and splices the video data to produce combined video data DAB. Data link circuit 19 inserts a desired amount of blanking data and stuffing data, generated by the blanking generator 20 and the stuffing generator 21, at a splice point of video data DA and DB. This blanking data and stuffing data is inserted as necessary in order to prevent the VBV buffer from failing.

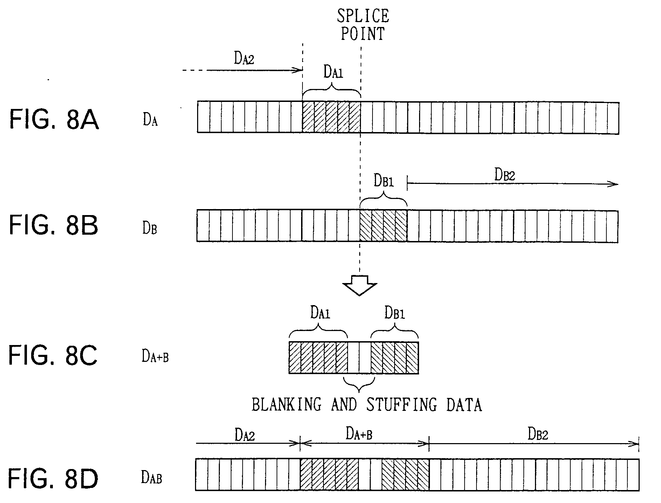

It is not necessary for data link circuit 19 to read all of the video data DA and DB which are to be spliced. As illustrated in Figs. 8A to 8C, data link circuit 19 reads video data DA1 and DB1 only near the splice point as required for the splice processing. Thus, video data DA1 and DB1 are spliced together, blanking data and stuffing data are inserted between the video data DA1 and DB1 to produce spliced video data DA+B. This spliced video data is then stored in memory 10 in TS packet form. Spliced video data DA+B can be readily produced upon data output by reading the video data from memory 10 in a desired order.

Output processing unit 6 reads and outputs a desired portion of video data stored in memory 10 to multiplex the combined video data DA+B, and video data that has not been spliced, such as programs C, E, to output the multiplexed video data as a transport stream $S_{OUT}$. Specifically, output processing unit 6 reads partial video data DA2 of video data DA, subsequently reads the linked video data DA+B, and further reads partial video data DB2 of video data DB to output the spliced video data DA+B, as illustrated in Fig. 8D. In parallel, output processing unit 6 reads TS packets of video data of the unspliced programs C, E. These data programs are multiplexed with the spliced video data DA+B. TS packets containing data of C, E programs are inserted between respective TS packets of combined video data DA+B according to a predetermined timing. Transport stream $S_{OUT}$ is thus output having the spliced video data DAB and the video data of unspliced other programs C, E multiplexed therein.

Output processing unit 6 comprises a time stamp regenerator 22; an output processor 23; a scheduler circuit 24; and a PCR regenerator 25. Time stamp regenerator 22 adds a new time stamp information, such as PTS, DTS, and program clock reference PCR to the video data DB1 and DB2 which are connected after the splice point, and also adds required blanking pictures that are inserted between video data DA and DB by stuffing processing. Originally, the video data DA and DB each had their own time stamps added thereto to prevent the VBV buffer from overflowing or underflowing. However, these time stamps likely do not match after the splicing operation. For this reason, time stamps may be possibly discontinuous before and after the splice point. To prevent this, time stamp regenerator 22 detects time stamps added to the video data DA up to the splice point from the video data DA, and adds new time stamps continuous from the previous time stamps to the video data DB1 and DB2 after the splice point.

Scheduler circuit 24 estimates the amount of code that will be generated in the VBV buffer of the receiver upon receipt of the spliced data, and schedules the output timing of the TS packets of the video data DA2, DA+B and DB2 stored in memory 10 based on the analysis result output from buffer simulator 18 by CPU 7. Scheduler circuit 24 also schedules the output of the other non-spliced programs C, E. Then, scheduler circuit 24 outputs the scheduling result to output processor 23 as a scheduling list. The scheduling list may include entry information for specifying which TS packet is to be output, and output time information indicative of the output timing for the TS packet arranged in a list form. Because most of the TS packets are input and output without modification, scheduler circuit 24 specifies an output time for a TS packet according to its input time (i.e., the value of a system time clock STC upon input of the TS packet) for simplifying processing. However, for TS packets positioned after the splice point within the spliced data stream, scheduler circuit 24 assumes that the TS packets in the spliced data stream are input to splicing apparatus 1 continuously after TS packets input before the splice point. Scheduler circuit 24 calculates, based upon this assumption, the value of a system time clock STC which is added to the input time for each of the TS packets, and specifies an output time for each of the TS packets in the spliced data stream. Output processor 23 sequentially reads TS packets of the spliced video data DA+B and video data of the other programs C, E based on the scheduling list output from scheduler circuit 24, and outputs the read TS packets to PCR regenerator 25 as a transport stream $S_{OUT}$.

PCR regenerator 25 adds a new program clock reference PCR to each TS packet in the transport stream $S_{OUT}$ such that the program clock reference PCR is continuous over the TS packets. When the TS packets are sequentially outputted based on the scheduling list produced by scheduler circuit 24, the reference time information PCR in the transport stream SOUT must be continuous. However, if output processor 23 is operated in accordance with an operating clock that is external to output processor 23, the timing at which TS packets are actually output may deviate from the scheduling list, possibly resulting in discontinuous program clock reference PCR. For this reason, in splicing apparatus 1, program clock reference PCR in the transport stream $S_{OUT}$ is corrected by PCR regenerator 25. PCR regenerator 25 adds the value of PCRnew as the program clock reference PCR, in accordance with the following equation:

$$PCRnew = PCRold + (STCreal - STCideal) \quad (1)$$

where PCRold is the program clock reference PCR currently added to the transport stream $S_{OUT}$; STCideal is the time at which the transport stream $S_{OUT}$ is scheduled to be output, determined in accordance with the scheduling list; and STCreal is the time at which the transport stream $S_{OUT}$ is actually output. Transport stream $S_{OUT}$, with newly added program clock reference PCR, is finally output from splicing apparatus 1.

(2) Configuration of Input Processor

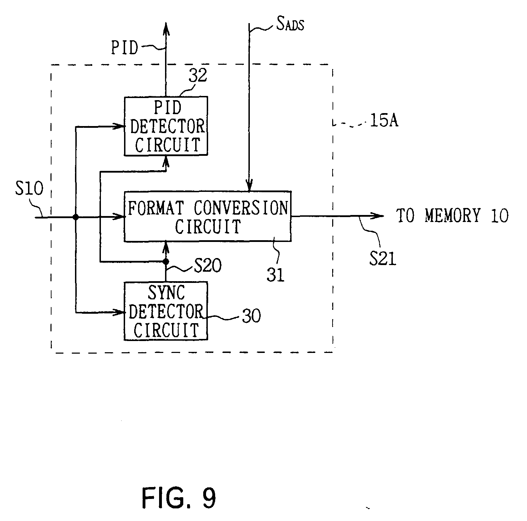

The configuration of input processors 15A, 15B will be described first making reference to Fig. 9 in addition to Fig. 6. Because input processors 15A, 15B have a similar configuration, only input processor 15A will be described.

As illustrated in Fig. 9, input processor 15A comprises a sync detector circuit 30; a format conversion circuit 31; and a PID detector circuit 32. Sync detector circuit 30 detects a synchronization byte code ("47H") added at the head of each TS packet in a transport stream S10 inputted thereto to detect the beginning of each TS packet. A sync pulse S20 indicative of the beginning of each TS packet is output to format conversion circuit 31 and PID detector circuit 32 when the synchronization code is detected.

PID detector circuit 32 detects packet identification information PID added to each TS packet in accordance with the detection of sync pulse S20. Because the packet identification information PID is stored in an area a predetermined number of bits from the head of each TS packet, PID detector circuit 32 counts the predetermined number of bits from sync pulse S20, and detects the stored packet identification information PID. Then, PID detector circuit 32 sends the detected packet identification information PID to PID lookup table 16A as a keyword. PID lookup table 16A receives this packet identification information PID, searches for address information for rearranging TS packets in accordance with the packet identification information PID for storage in memory 10, and sends resultant address information $S_{ADS}$ to format conversion circuit 31. Format conversion circuit 31 receives the 188-byte TS packet and the associated address information $S_{ADS}$ for each TS packet, adds additional unique information to each TS packet, and stores each TS packet to which additional information has been added at an address position indicated by the address information $S_{ADS}$.

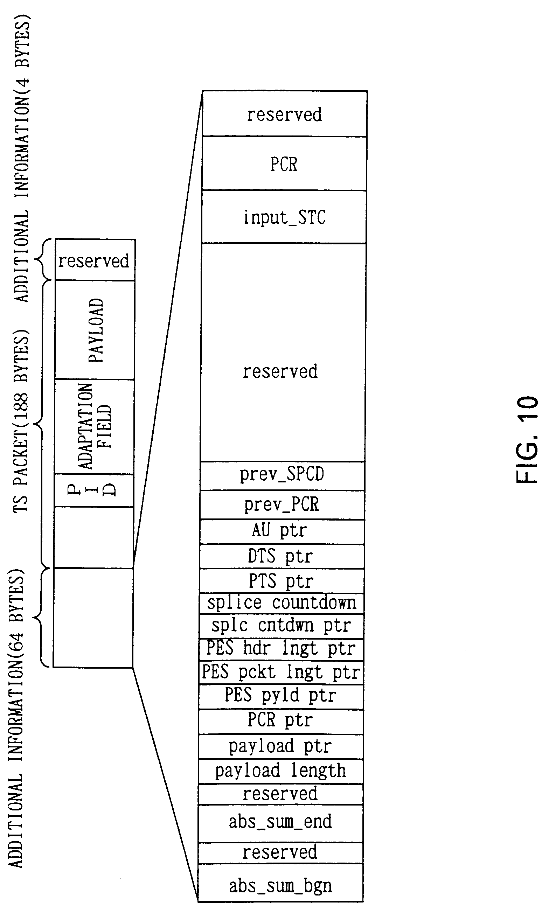

Taking advantage of the fact that memory 10 stores information in units of 256 bytes, the additional information added by format conversion circuit 31 includes 68 bytes before and after the 188-bytes in each TS packet, as illustrated in Fig. 10. Additional information included in the 68 bytes to be added may include various kinds of information as illustrated in Fig. 10. "abs_sum_bgn" is information indicative of the start address of payload data of an associated TS packet, and "abs_sum_end" is information indicative of the end address of the payload data. "payload_length" is information indicative of the length of the payload portion of the TS packet, and "payload_ptr" is pointer information pointing to a head of the payload portion of the TS packet. Also, "PCR_ptr" is a pointer information pointing to a head of program clock reference PCR in the TS packet, and is loaded with the value "0xff" when no program clock reference PCR is included in the TS packet.

"PES_pyld_ptr" is a pointer information pointing to a head of a payload portion of a PES packet, and is loaded with the value "0xff" when no payload portion of a PES packet exists in the TS packet. "PES_pckt_lngt_ptr" is a pointer information pointing to a head position at which a length of a PES packet is stored, and is loaded with the value "0xff" when no payload portion of a PES packet exists in the TS packet. "PES_hdr_lngt_ptr" is a pointer information pointing to a position at which the length of a header of a PES packet is stored, and is loaded with the value "0xff" when no header of a PES packet exists in the TS packet. "splc_cntdwn" is pointer information pointing to a head position at which information on splice count down is stored, and is loaded with the value "0xff" when such information does not exist in the TS packet. "splice_countdown" stores information indicative of the value of splice count down for the TS packet.

"PTS_ptr" is pointer information pointing to a head position at which time information PTS in the TS packet is stored, and is loaded with the value "0xff" when no time information PTS exists in the TS packet. "DTS_ptr" is pointer information pointing to a head position at which time information DTS in the TS packet is stored, and is loaded with the value "0xff" when no time information TDS exists in the TS packet. "AU_ptr" is pointer information pointing to a head of an access unit, and is loaded with the value "0xff" if no access unit exists in the packet. "prev_PCR" is information indicative of the number of a TS packet in which the previous program clock reference PCR is stored, and "prev_SPCD" is information indicative of the number of a TS packet in which the previous splice count down is stored. Also, "input_ STC" is the value of a system time clock STC when the TS packet is input, and "PCR" is the value of program clock reference PCR in the TS packet.

By thus adding a variety of pointer and other information indicative of positions of stored information when a TS packet is stored in memory 10, CPU 7 can directly access desired parameters to be used in the splicing operation. Thus, the TS packet can be handled as if it were an elementary stream by reading data at desired positions in the TS packet. Also, with the value of the system time clock STC added as the time at which a TS packet was input, a TS packet not subjected to a splicing operation can be output without causing the VBV buffer to fail, by referring to this input time to output the TS packet at timing a predetermined time period delayed from the input time. Thus, such TS packets only require scheduling processing only for registering the input time. Format conversion circuit 31 adds such additional information to each TS packet input thereto to produce recording data S21 which is supplied to memory 10, and rearranged in accordance with the packet identification information PID for storage in memory 10.

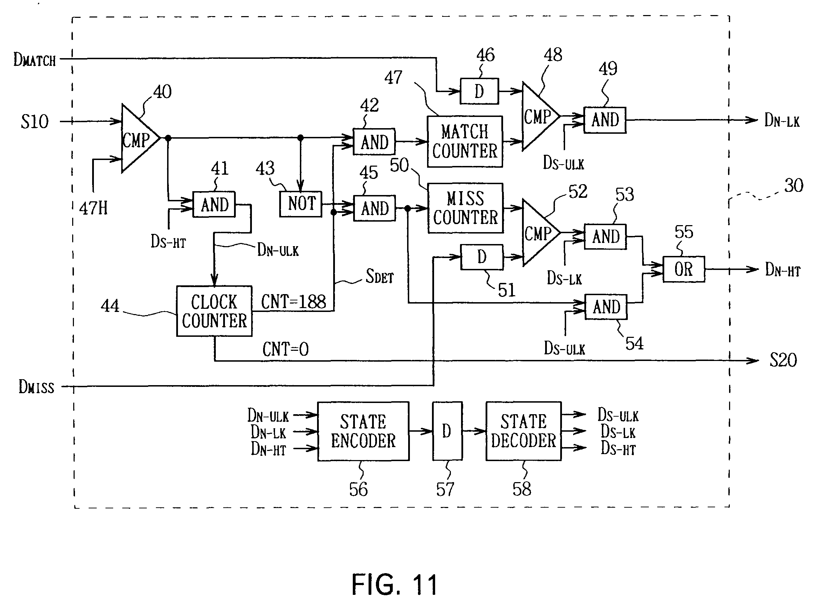

Next, the configuration of sync detector circuit 30 will be described making reference to Fig. 11 in addition to Fig. 6. Each TS packet in transport stream S10 is an equal-length data packet including a synchronization byte. However, since the data code word used to indicate the synchronization byte may also be used for other purposes, the same data code as that of the synchronization byte may appear in another portion of the TS packet. However, since all TS packets have the same length of 188 bytes, the synchronization bytes are positioned at regular intervals in transport stream S10. By performing a fly wheel processing in accordance with the regular positioning of the synchronization bytes in which the bytes are read as received, the synchronization bytes can be correctly detected to produce a plurality of sync pulses S20 indicative of the timing of the starts of the respective TS packets. Sync detector circuit 30 which relies on the fly wheel processing is configured as illustrated in Fig. 11.

In sync detector circuit 30, three states are employed in the course of detecting synchronization bytes positioned in transport stream S10. One is a hunt state, and the remaining two are an unlock state and a lock state. In the hunt state, sync detector circuit 30 has lost the position of a synchronization byte and is looking for it. In the unlock state sync detector circuit 30 has detected a likely position of a synchronization byte but the determined position is not definite. In the lock state the determined position of a synchronization byte is definite. Sync detector circuit 30 begins with the hunt state, and transitions to the unlock state when it detects a byte considered likely to be a synchronization byte, and further transitions to the lock state when a predetermined condition is satisfied in the unlock state, and the position of the synchronization byte has been definitely determined. Conversely, even once in the lock state or the unlock state, synch detector circuit 30 will transition to the hunt state if it loses the synchronization byte. Sync detector circuit 30 can correctly detect the synchronization byte by reaching the lock state through the foregoing state transitions.

In sync detector circuit 30, transport stream S10 is first input to a comparator 40. The comparator 40 compares a value in transport stream S10 inputted thereto with data "47H" which is the value employed as the data code of the synchronization byte, and outputs a logical output at level "H" if the value in transport stream S10 is coincident with "47H" and a logical output at level "L" if not coincident.

An AND circuit 41 takes a logical AND of state information DS-HT at level "H" indicative of the hunt state, output from a state decoder 88 later described, and the output of comparator 40. Because comparator 40 outputs a logical output at level "H" if it detects a synchronization byte "47H" from transport stream S10, AND circuit 41 outputs a logical output at level "H" when sync detector circuit is in the hunt state, and a synchronization byte is detected. The logical output at level "H" of AND circuit 41 is input to a reset terminal of a clock counter 44 as next unlock information DN-ULK. The next unlock information DN-ULK is also input to a state encoder 56, later described to force a state change to the unlock state. When the next unlock information DN-ULK is generated, sync detector circuit 30 transitions to the unlock state to output state information DS-ULK indicative of the unlock state.

A clock counter 44 cyclically counts from "0" to "188" bytes, and its count value is forcibly reset to "0" upon receipt of each next unlock information DN-ULK at level "H from each TS packet." Clock counter 44 outputs a sync pulse S20 when its count value is "0," and outputs a pulse signal $S_{DET}$ for determining whether or not a synchronization byte is definite when its count value is "188." For reference, the pulse signal $S_{DET}$ indicates the timing at which the next synchronization byte should be detected after a synchronization byte has been detected.

An AND circuit 42 determines whether or not comparator 40 has detected a synchronization byte when the pulse signal $S_{DET}$ is generated by taking a logical AND of the pulse signal $S_{DET}$ and the output from comparator 40. As a result, if comparator 40 has detected a synchronization byte at the time the pulse signal SDET was generated, AND circuit 42 outputs a logical output at level "H." A match counter 47 counts the number of pulses at level "H" output from AND circuit 42 to count the number of times the synchronization byte has been detected at the proper timing, and outputs the count value to a comparator 48.

Comparator 48 receives a definition value $D_{MATCH}$ supplied from CPU 7 through a latch circuit 46, and outputs a logical output at level "H" when the definition value $D_{MATCH}$ becomes equal to the count value of match counter 47. An AND circuit 49 takes a logical AND of the state information DS-ULK indicative of the unlock state and the output of comparator 48, and outputs next lock information DN-LK at level "H" at the timing comparator 48 outputs a logical output at level "H." The next lock information DN-LK is input to state encoder 56, later described. When the next lock information DN-LK is generated, sync detector circuit 30 transitions to the lock state to output state information DS-LK indicative of the lock state. When the synchronization byte is detected equal to or more than a predetermined number of times from the time the synchronization byte was first detected as counted in match counter 47, sync detector circuit 30 can transition to the lock state and output the sync pulse S20 accurately synchronized with the synchronization byte.

In order to detect if a synchronization signal has been lost, an AND circuit 45 receives the output from comparator 40 through an inverting circuit 43 as well as the pulse signal $S_{DET}$, and takes a logical AND of these signals. In this event, when the comparator 40 outputs a logical output at level "L" and the timing the pulse signal $S_{DET}$ is at level "H" (i.e., when the comparator 40 does not detect a synchronization byte at the expected timing), AND circuit 45 outputs a logical output at level "H." A miss counter 50 counts the number of times a synchronization byte does not come at the expected timing by counting the number of pulses at level "H" of AND circuit 45, and outputs the count value to a comparator 52. Comparator 52 receives a definition value $D_{MISS}$ supplied from CPU 7 through a latch circuit 51, and outputs a logical output at level "H" when the definition value $D_{MISS}$ becomes equal to the count value of miss counter 50. An AND circuit 53 takes a logical AND of the state information DS-LK indicative of the lock state and the logical output of comparator 52, and outputs a logical output at level "H" if the status is in the lock state and comparator 52 outputs a logical output at level "H", indicating that a sync signal has been missed more than a predetermined number of times when in the lock state.

An AND circuit 54 takes a logical AND of an output of AND circuit 45 and the state information DS-ULK indicative of the unlock state, and outputs a logical output at level "H" if the status is in the unlock state and AND circuit 45 outputs a logical output at level "H", indicating that a single sync pulse has been missed when in the unlock state. An OR circuit 55 outputs next hunt information DN-HT at level "H" when either of the AND circuits 53, 54 outputs at level "H." The next hunt information DN-HT is input to the state encoder 56, later described. When the next hunt information DN-HT is generated, sync detector circuit 30 transitions to the hunt state and outputs the state information DS-HT indicative of the hunt state. In this way, sync detector circuit 30 is adapted to again transition to the hunt state to look for a synchronization byte when the synchronization byte is not detected equal to or more than a predetermined number of times at the expected timing of the synchronization byte, in the lock state, or when the synchronization byte is not detected at the expected timing in the unlock state.

As described above, the next unlock information DN-ULK, the next lock information DN-LK, and the next hunt information DN-HT are converted into state information DS-ULK, DS-LK, DS-HT, respectively, after predetermined timing through the state encoder 56, a latch circuit 57 and the state decoder 58.

(3) Configuration of PID lookup Table

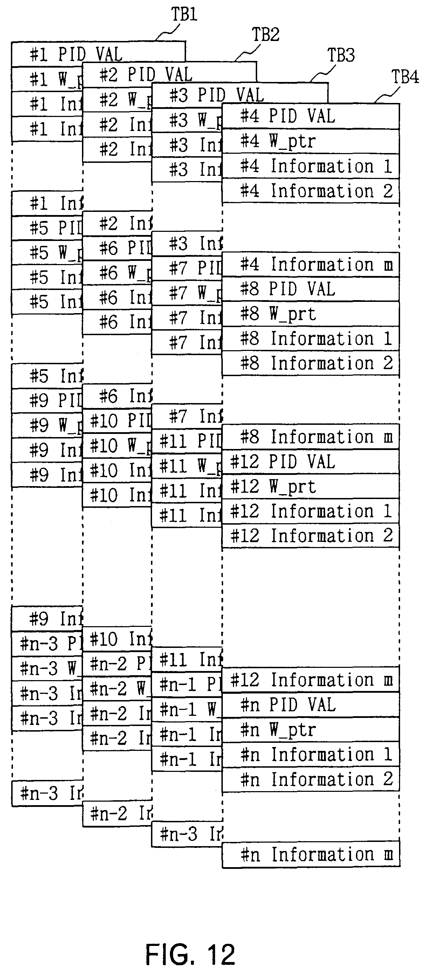

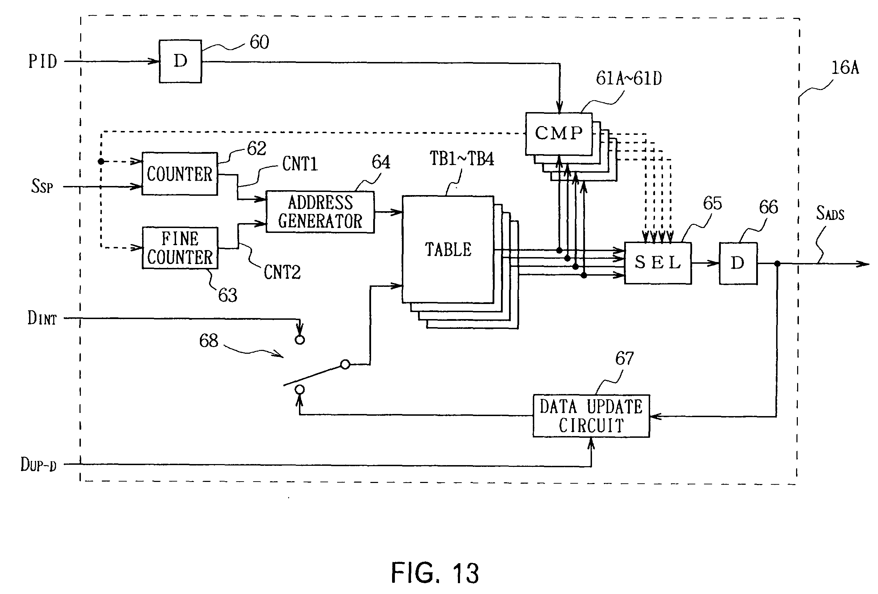

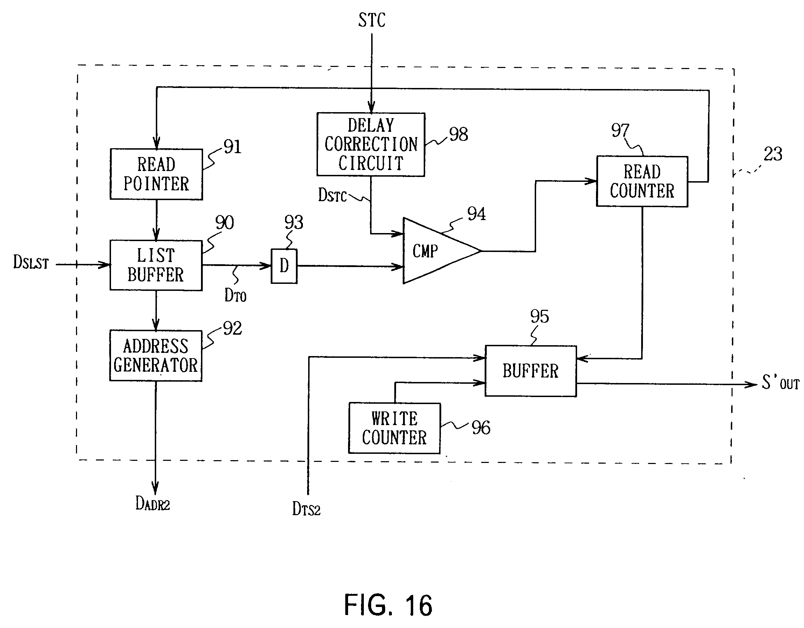

PID lookup tables 16A and 16B will be described making reference to Figs. 12 and 13, in addition to Fig. 6. Because PID lookup tables 16A and 16B have a similar configuration, only PID lookup table 16A will be described, it being understood that the description applies equally well to Fig. 16B.

PID lookup table 16A searches for, and provides address information for rearranging and grouping TS packets in accordance with packet identification information PID and stores the rearranged TS packets in memory 10. The search for address information is started after a TS packet has been input to input processor 15A, and must be completed by the time a next TS packet reaches input processor 15A, so this next TS packet may be processed. Thus, fast operation is required. For this reason, PID lookup table 16A comprises a plurality of tables that are used for the address search such that search processing is performed in parallel. The plurality of tables allows for the search for address information associated with the packet identification information PID specified by input processor 15A at a higher speed.

Each of the plurality of tables provided in PID lookup table 16A is structured as shown in the memory map of Fig. 12. Specifically, in each of tables TB1 to TB4, address information is arranged in discrete information packets and stored for each packet identification information PID. The value of the packet identification information PID is stored at the head of each information packet as a search tag. For searching tables TB1 to TB4 in order to retrieve desired address information, a search tag is searched for to find an information packet in which address information corresponding to the desired packet identification information is stored. Once the appropriate information packet has been found, address information stored at and subsequent to the search tag within the information packet is sequentially read and output therefrom.

In Fig. 12, "PID VAL" indicates the value of packet identification information PID used as a search tag; "W_ptr" indicates address information indicative of the write address at which an associated TS packet is to be stored in memory 10; and "Information" indicates address information to generate the additional information stored together with the TS packet. Memory 10 stores TS packets in a ring buffer manner, and thus each address information is updated as required after it is read.

The specific configuration of the apparatus for retrieving information from PID lookup table 16A will now be described making reference to Fig. 13. As is illustrated in Fig. 13, PID lookup table 16A comprises a plurality of reference to circuit elements for performing desired actions on tables TB1 to TB4 which store the aforementioned address information. First, packet identification information PID outputted from PID detector circuit 32 of input processor 15A is supplied to each of comparators 61A to 61D through a latch circuit 60.

A search start pulse SSP output from PID detector circuit 32 together with the packet identification information PID is supplied to a counter 62 and a fine counter 63. Counters 62 and 63 are provided for generating an access position on each of the tables TB1 to TB4, where counter 62 generates upper, most significant bits of an access position and fine counter 63 generates lower, less significant bits of the access position. If only the output of the counter 62 is used to specify access positions, positions are specified at desired search tag intervals in the tables TB1 to TB4. Therefore, when a count interval for counter 62 is set to the interval of search tags in tables TB1 to TB4, the location of the search tags in the tables TB1 to TB4 can be specified by merely employing the output of counter 62 and not including the output of fine counter 63. Upon receipt of a search start pulse SSP, counter 62 begins a counting operation, and outputs its count value CNT1 to an address generator 64. Address generator 64 generates the address of an access position specified by the count value CNT1 of counter 62, and outputs the address to each of tables TB1 to TB4. Thus, tables TB1 to TB4 are accessed at their first search tags, and the values of packet identification information PID in the first search tag from each of the tables is output to comparators 61A to 61D, respectively.

Each of comparators 61A to 61D compares the value of packet identification information PID supplied thereto through latch circuit 60 with the value of the packet identification information PID output from each table TB1 to TB4, and advances the count of the counter 62 by one if none of the values are coincident. This counter advancing allows a next search tag storing packet identification information PID to be searched in each table. This operation is repeated until two values of the packet identification information PID (one from latch circuit 60, and one from one of the tables) are coincident. If it is determined that two values of the packet identification information PID coincide, the comparator that has detected the desired PID information coincidence, and stops the counting operation of counter 62. Fine counter 63 then begins a fine counting operation. Simultaneously a selector 65 selects the table in which the coincidence was detected. Address information stored at the search tag onward is sequentially read by advancing the count of the fine counter 63 one by one since the count width of the fine counter 63 is equal to the information storing interval in each table TB1 to TB4. Thus, information associated with the desired PID information is output. The read address information is output to format conversion circuit 31 of input processor 15A as address information $S_{ADS}$ through selector 65 and a latch circuit 66.

When address information stored in tables TB1 to TB4 is to be updated, new address information is supplied to a data update circuit 67 which updates the address information stored in each of the tables based on update information $D_{UP-D}$ supplied from CPU 7. The updated address information is stored over previously stored address information in tables TB1 to TB4 through a switch 68, thereby allowing for the update of the address information. For setting an initial value of the address information stored in the tables TB1 to TB4, an initial value $D_{INT}$ supplied from the CPU 7 is supplied to the tables TB1 to TB4 through the switch 68, and a storage location is specified through the address generator 64, whereby the initial value $D_{INT}$ can be loaded at a desired position in the tables TB1 to TB4.

(4) Configuration of Parser Unit

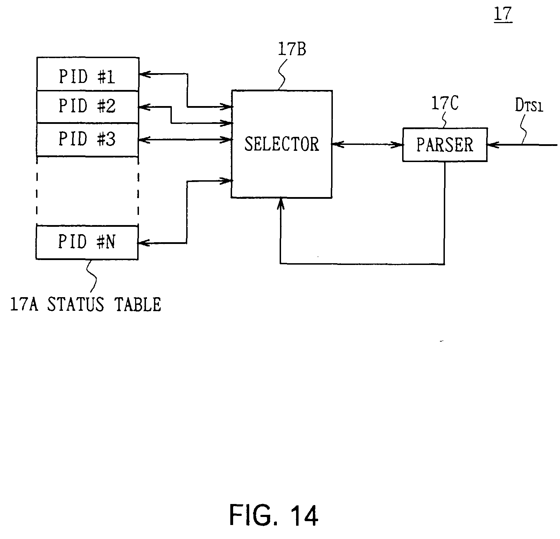

Parser unit 17 will now be described making reference to Fig. 14, in addition to Fig. 6. As is shown in Fig. 6, parser unit 17 accesses memory 10 to parse TS packets which contain video data that is to be subjected to a splicing operation, and extracts a variety of coding parameters which have been added to encoded data during compression encoding and packetization. Parameter information to be extracted includes PES or TS parameters, including time information, such as presentation time stamp PTS, decode time stamp DTS, PCR, length of a PES packet, the length of a PES header, bit rate, VBV size bit_rate_extension, VBV_size_extension, closed_GOP, temporary_reference, picture_coding_type, VBV_delay, top_field_first, repeat_first_field, and so on.

When an input transport stream is of a multi-program type, data streams having different packet identification information PID are mixed therein, so that a complicated operation is involved to extract parameters associated with each of these streams. However, because respective TS packets have been previously rearranged and stored in accordance with the packet identification information PID by the input processors, each rearranged stream can be parsed so that parameter information associated therewith can be readily extracted.

Generally, there are at least two or more video data streams which may be subjected to a splicing operation. For this reason, parser unit 17 must parse the foregoing parameters for at least two or more video data streams. Parser unit 17 parses a plurality of video data streams to be subjected to a splicing operation in time division processing to extract the parameters for each data stream. When data streams are parsed in time division processing, parser unit 17 must hold the result of the parsing operation on a particular data stream so far made when it proceeds to parse information from another stream, thus maintaining parallel collections of extracted parameters. For this operation, parser unit 17 includes a status table 17A for storing unfinished parsing results. When parser unit 17 proceeds to parse a next data stream due to time division multiplex processing, a parsing result so far obtained is stored in the status table.

The configuration of parser unit 17 is shown in Fig. 14. For example only, it will be assumed herein that a total number of streams to be subjected to a splicing operation is N, and to TS packets of these streams are added packet identification information PID as PID="1," "2," ......, "N" for the sake of explanation. Parser unit 17 includes status table 17A formed for each data stream (i.e., for each packet identification information) to store parsing results. Access to different portions of status table 17A is switched by a selector 17B, such that a portion of the table associated with a desired stream can be accessed in status table 17A.

First, a parser 17C reads from memory 10 data $D_{TS1}$ of a TS packet to be subjected to a splicing operation and having packet identification information PID set at "1". Selector 17B is controlled to connect parser 17C with a portion of table 17A having the packet identification information PID set at "1" in the status table 17A. Parser 17C parses the syntax of the data $D_{TS1}$ of the TS packet in order to extract a variety of parameters as mentioned above. At the time a next data stream is to be parsed, after the lapse of a predetermined time period from receipt of the first data stream, parser 17C stores the result of the parsing so far obtained in the portion of status table 17A having the packet identification information PID set at "1" via selector 17B.

Subsequently, parser 17C controls selector 17B to connect parser 17C with a portion of status table 17A having the packet identification information PID set at "2". Parser 17C reads data $D_{TS1}$ of a TS packet having the packet identification information PID set at "2" from memory 10, and parses the syntax of the $D_{TS1}$ data in order to extract parameters as mentioned above for the data stream having packet identification information PID set at "2." Then, at the time the next data stream is to be parsed, parser 17C stores the result of the current parsing operation so far obtained in the portion of status table 17A having the packet identification information PID set at "2" via selector 17B. By subsequently performing the processing as described above in a similar manner at every predetermined time, corresponding to the arrival of each data stream to be parsed, parser 17C parses the streams to be subjected to the splicing operation in accordance with a time division multiplexing scheme.

As a result, at the time the stream having the packet identification information PID set at "1" is again to be parsed, parser 17C controls selector 17B to access the portion of the table having the packet identification information PID set at "1" to extract the previous parsing result, and subsequently reads the data $D_{TS1}$ of the next TS packet having the packet identification information PID set at "1" from memory 10 to continue the parsing operation from the point at which the parsing was previously interrupted. Then, at the time the next stream is to be parsed, parser 17C stores the result of the parsing operation so far obtained in the portion of the table having the packet identification information PID set at "1," and proceeds to parse the next data stream. By repeating the processing as described above, parser 17C parses the data streams to be subjected to the splicing operation in a time division multiplexed fashion. When the parsing operation is eventually completed, the parsing results for each packet identification information PID stored in status table 17A are sent to buffer simulator unit 18.

(5) Configuration of Data Link Circuit

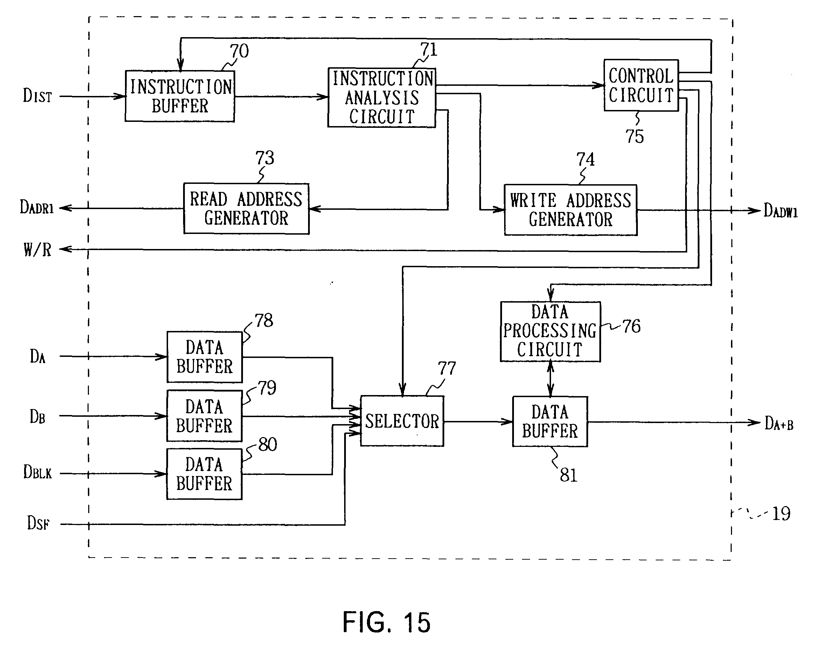

Data link circuit 19 will be described, making reference to Fig. 15 in addition to Fig. 6. In splicing apparatus 1 constructed in accordance with an embodiment of the invention, in response to the parsing results received from buffer simulator 18, CPU 7 determines a splice point at which a splicing operation is to be performed. CPU 7 also determines whether or not blanking data and/or stuffing data should be inserted at the splice point. CPU 7 sends the determination results to data link circuit 19 as a data splicing instruction. Upon receipt of the data splicing instruction, data link circuit 19 executes the splicing operation for video data of streams to be subjected to the splicing operation.

The determination as to whether or not blanking data and/or stuffing data should be inserted at the link point of the spliced data stream is made based on an occupancy of the VBV buffer on the receiver/decoder side upon receipt of the spliced data stream. Specifically, if the splicing operation will cause an underflow of the VBV buffer that stores the spliced stream, blanking pictures may be inserted to increase the occupancy of the VBV buffer. Conversely, if the splicing operation will cause an overflow of the VBV buffer, stuffing data consisting of values "0" may be inserted to decrease the occupancy of the VBV buffer. In the example illustrated in the aforementioned Figs. 7A to 7C, since the VBV buffer may underflow as a result of a splicing operation, three blanking pictures are inserted between picture "n" and picture "m". Inserting these blanking pictures may in turn cause a slight overflow in the VBV buffer. Therefore, stuffing data is inserted with the last blanking picture to reduce the occupancy of the VBV to the desired level.

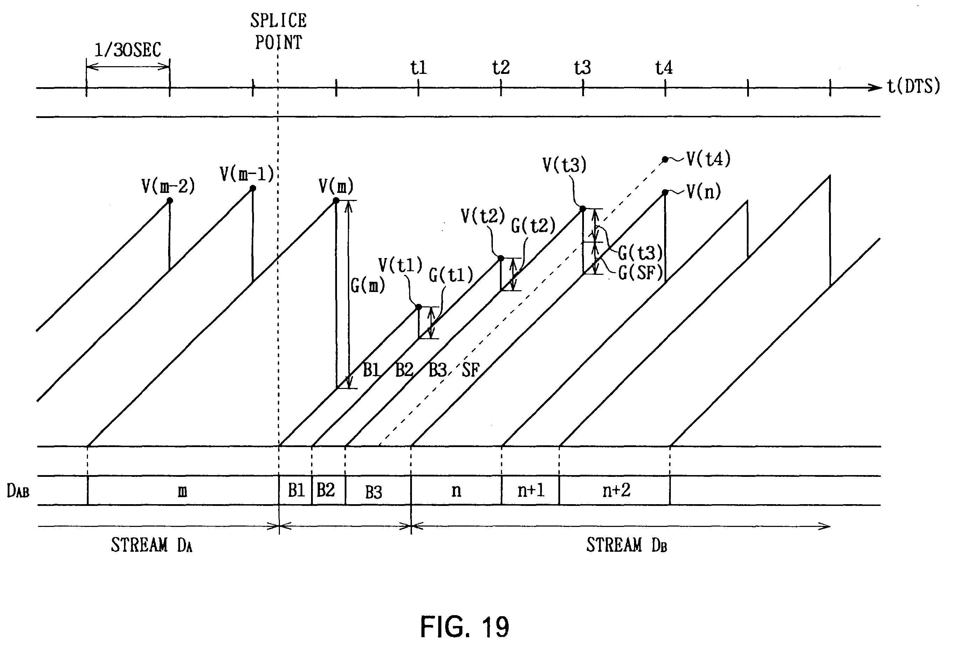

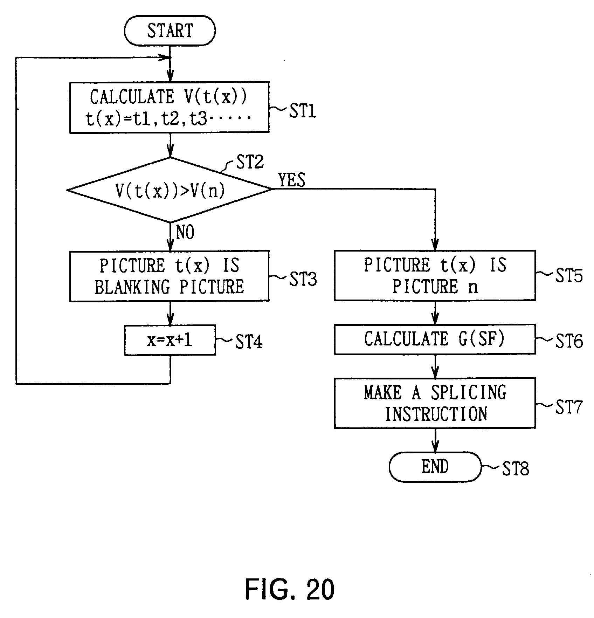

Referring to Figs. 19 and 20, the procedure for determining the number of blanking pictures and amount of stuffing data are to be inserted at the splice point will be more fully described.

CPU 7 calculates the number of blanking pictures to be inserted between a last picture "m" in the data stream to be positioned before the splice point and the first picture "n" in the data stream to be positioned after the splice point in the splicing operation. This determination is made based upon the occupancy value "V(m)" of the VBV buffer of the last picture "m", the occupancy value "V(n)" of the VBV buffer of the first picture "n" and a number of encoding bits "G(m)" generated by the process of encoding picture m. These variables are obtained from buffer simulator 18. The determination is made so that the buffer occupancy when picture n is decoded is equal to the buffer occupancy that would exist if no splicing operation had taken place, and picture n were decoded during standard processing. These variables are also used to determine the number of stuffing bytes to be inserted in the blanking picture. Thus, the number of blanking pictures and stuffing bytes are selected so that the buffer occupancy at the beginning of the data stream positioned after the splice point matches the actual required and expected buffer occupancy of the data stream positioned after the splice point so that the VBV buffer does not underflow or overflow.

As is shown in Fig. 19, and the flowchart of Fig. 20, at step S1 the occupancy of the VBV buffer of a picture that is to be decoded at time $t_1$ is determined in accordance with the equation $V(t_1) = V(m)-G(m)+R/30$, where $V(t_1)$ is the occupancy of the VBV buffer at time $t_1$, and $V(m)$ is the occupancy of the VBV buffer for picture "m". $G(m)$ is the number of encoding bits generated by the encoding process of encoding picture "m", and $R/30$ represents that a picture is output each 1/30 of one second, where "R" is the bitrate of the data streams. In Fig. 19, the value $V(t_1)$ is determined. $V(t_1)$ is essentially the value of the VBV buffer at the last timing less the data removed for decoding, plus the data added to the VBV buffer for the next picture.

Then, at inquiry step ST2 the calculated occupancy of the VBV buffer at time $t_1$ ($V(t_1)$) is compared to the desired occupancy of the VBV buffer at picture "n" to determine if the buffer occupancy at time $t_1$ is greater. If the inquiry is answered in the negative, and the occupancy of the VBV buffer is not greater, then the picture output at time $t_1$ is a blanking picture as shown at step ST3. Then at step ST4, the counter "x" is increased by 1, and the procedure returns to step ST1, and the calculation noted above is repeated for time $t_2$ and further time periods as is necessary.

This procedure continues until the inquiry at step ST2 is answered in the affirmative, that is the occupancy of the VBV buffer at the presently measured timing is greater than the desired occupancy of the VBV buffer at picture "n", control then passes to step ST5. This is shown in Fig. 19 at time $t_4$, where $V(t_4)$ is greater than $V(n)$. At step ST5, it is then determined that no additional blanking pictures are required, and the next picture that is output will be picture "n".

Control then proceeds to step ST6, where a number of stuffing bytes necessary to reduce the actual VBV buffer occupancy to the desired VBV buffer occupancy of picture n is determined. This is necessary because the insertion of the third blanking picture may cause an overflow of the VBV buffer in the near future because the occupancy value $V(t_4)$ is greater than $V(n)$. The number of required stuffing bytes is determined in accordance with the formula $G(SF) = V(t_4)-V(n)$. Simply, the number of stuffing bytes ($G(SF)$) equals the amount of the occupancy of the VBV buffer at time $t_4$ is greater than the desired occupancy of the VBV picture "n". After this determination, at step ST7, these stuffing bytes are added to the VBV buffer prior to the input of picture "n" so the desired VBV buffer occupancy is achieved. This is shown in Fig. 19 as the addition of bytes $G(SF)$, so that the occupancy of the VBV buffer at $t_4$ equals the desired occupancy for picture "n". Thereafter, further pictures in the data stream are input to, and decoded from, the VBV buffer without danger that the buffer will underflow or overflow.

The specific configuration of data link circuit 19 is illustrated in Fig. 15. Data link circuit 19 first inputs a data splicing instruction $D_{IST}$ supplied thereto from CPU 7 to an instruction buffer 70. The data splicing instruction $D_{IST}$ also includes information relating to locations in memory 10 at which data to be spliced in accordance with the splicing operation are stored, information on the amounts of blanking pages and stuffing data to be inserted, information on locations in memory 10 at which spliced data is stored, and so on.

An instruction analysis circuit 71 reads and analyzes the data splicing instruction $D_{IST}$ stored in instruction buffer 70, and outputs storage location information for video data to be subjected to a splicing operation. The information obtained as a result of the analysis is output to a read address generator 73. Instruction analysis circuit 71 also outputs storage location information on the location where video data will be stored after the splicing operation to a write address generator 74, and outputs information indicative of the contents of the splicing processing procedure to a control circuit 75. Control circuit 75 controls the general operation of data link circuit 19. Control circuit 75 sends control data in accordance with the contents of the splicing processing procedure supplied thereto from instruction analysis circuit 71 to a data processing circuit 76 and a selector 77. Data processing circuit 76 and selector 77 execute the data splicing processing procedure as instructed by CPU 7. Control circuit 75 also sends read/write (W/R) mode information for specifying a read mode or a write mode to memory 10 simultaneously with the output of an address from read address generator 73 or write address generator 74.

Read address generator 73 generates address information indicative of locations at which video data is stored in memory 10 based on location information for the video data to be subjected to the splicing operation, and sends these addresses to memory 10 as a read address $D_{ADR1}$. Video data DA and DB to be subjected to the splicing operation are read from the memory 10 based on the read address $D_{ADR1}$ and mode information W/R output from control circuit 75. When the video data DA and DB are read from memory 10, pointer information stored together with associated TS packets are used to read the desired video data from predetermined positions within the TS packets. The video data DA and DB read in this manner comprise video data in a form similar to that of elementary stream data. Video data DA and DB, read from memory 10 and to be subjected to the splicing operation, are input to data buffers 78, 79, respectively. Blanking data $D_{BLK}$ generated by blanking generator 20 is also input to a data buffer 80.

Selector 77 selects data to be processed by the splicing operation based on control data forwarded from control circuit 75, and stores the selected data in a data buffer 81. More specifically, selector 77 reads the video data DA and DB as required for the splicing operation that are stored in data buffers 78, 79. The selected video data read out from the respective buffers is then stored in data buffer 81. Selector 77 then reads a predetermined number of sheets of blanking data $D_{BLK}$ stored in the data buffer 80 and stores the read out blanking data $D_{BLK}$ in data buffer 81 as well. Finally, a desired amount of stuffing data $D_{SF}$ produced by stuffing generator 21 is retrieved and is also stored in data buffer 81. The amount of blanking data and stuffing data is determined as described above.

Data processing circuit 76 then reads video data DA and DB, blanking data $D_{BLK}$ and stuffing data $D_{SF}$ stored in data buffer 81, based on control data from the control circuit 75, and splices these data portions together to produce a spliced video data sequence which is then transformed into TS packetized spliced video data DA+B. The TS packetized spliced video data DA+B is again stored in data buffer 81. Consequently, the spliced video data DA+B is read from data buffer 81 and supplied to memory 10 together with a write address $D_{ADW1}$ generated by write address generator 74 and mode information W/R indicating a write operation, and stored at a location specified by the write address $D_{ADW1}$.

When a plurality of data splicing instructions $D_{IST}$ are fed to instruction buffer 70, control circuit 75 outputs a read instruction to instruction buffer 70 to read each next data combination instruction, one at a time, and proceeds with the processing in a similar manner for each data splicing instruction. Data link circuit 19 reads the video data DA and DB to be subjected to a splicing operation from memory 10 based on a data splicing instruction $D_{IST}$ from CPU 7, retrieves the blanking data $D_{BLK}$ and stuffing data $D_{SF}$ if required, and links these data to produce a spliced video data DA+B which is then stored again in memory 10.

(6) Method of Generating Blanking Data

A method of generating blanking data DBLK in the blanking generator 20 will now be described, referring once again to Fig. 6. Blanking generator 20 is adapted to produce blanking data $D_{BLK}$ by consisting all macroblocks only of DC values for intra-frame coded pictures. Also, for inter-frame predictive coded pictures subsequent to the intra-frame coded pictures, the blanking generator 20 produces blanking data $D_{BLK}$ by setting a differential value between a macroblock and a reference macroblock and a motion vector to zero or by forming a picture of skipped macroblocks.

(7) Configuration of Output Processor

Output processor 23 will now be described making reference to Fig. 16 in addition to Fig. 6. Output processor 23 reads and outputs TS packets of a spliced program and TS packets of other programs to be multiplexed together with the spliced program from memory 10 based on a scheduling list created by the scheduler circuit 24 to produce a multiplexed transport stream $S_{OUT}$.

TS packets of programs not subjected to splicing are free from any processing within splicing apparatus 1. Such TS packets may be output from splicing apparatus 1 subject only to a delay corresponding to a system delay caused by splicing apparatus 1 so that these TS packets are output at a proper timing as compared with TS packets that are subjected to a splicing operation. For providing such a delayed output, if the time a TS packet was input to splicing apparatus 1 is known, the TS packet may be output at a desired time according to the system delay. Thus, once the system delay has elapsed after the input time for a particular TS packet, the delayed TS packet may be output, realizing the delayed output. For this purpose, a system time clock STC is added to each of the TS packets in the input processors 15A, 15B when input to splicing apparatus 1. The input time is thus registered in each TS packet, such that the value of the system time clock STC indicative of the input time is used to determine output time information in the scheduling list.

The configuration of output processor 23 for performing such processing will be described making specific reference to Fig. 16. As illustrated in Fig. 16, in output processor 23, a scheduling list data $D_{SLST}$ received from scheduler circuit 24 is input to a list buffer 90. The scheduling list stored in list buffer 90 includes information for specifying the output time information for each TS packet to be output. The output time information consists of the value of the system time clock STC indicative of the input time of the TS packet. List buffer 90 reads the scheduling list in response to a read operation specified by a read pointer 91, and sends the entry information in the read list to an address generator 92, and sends output time information $D_{TO}$ to a comparator 94 through a latch circuit 93.

Address generator 92 generates a read address $D_{ADR2}$ for a TS packet specified by the entry information supplied thereto from list buffer 90, and supplies the read address $D_{ADR2}$ to memory 10. In response, a TS packet $D_{TS2}$ to be output from splicing apparatus 1 specified by the entry information is read from memory 10. A buffer 95 receives the TS packet $D_{TS2}$, and writes the TS packet $D_{TS2}$ in an area of buffer 95 specified by a write counter 96.

A delay correction circuit 98 is loaded with a current value of the system time clock STC. Delay correction circuit 98 subtracts the value of the system delay as a result of propagation of the signal through splicing apparatus 1 from the value of the system time clock STC to derive the value of a corrected system time clock STC which is output to comparator 94 as time information $D_{STC}$.

Comparator 94 determines whether or not the time information $D_{STC}$ output from delay correction circuit 98 matches the output time information $D_{TO}$ of the TS packet supplied thereto through latch circuit 93. If the two time information match, an output signal at level "H" to a read counter 97 is output from comparator 94. Thus, it is determined that the corrected time information $D_{STC}$ is coincident with the output time information $D_{TO}$. In this case, the delayed time from the input of the TS packet has been reached.

A read counter 97 specifies an area of buffer 95 from which information is to be read by outputting a control signal for specifying a read area to buffer 95 in response to an output signal from comparator 94. Consequently, as buffer 95 reads TS packets in response to the control signal, the TS packets specified by the scheduling list is output from output processor 23.

When buffer 95 completes a read operation, read counter 97 notifies read pointer 91 of the completion of the read operation. In response to this notification, read pointer 91 instructs list buffer 90 to read the next entry information and the output time information $D_{TO}$. Consequently, the processing as described above is repeated in order to read consecutive TS packets specified by the scheduling list in order, thereby outputting the transport stream $S_{OUT}$ which has multiplexed therein TS packets of a spliced program and TS packets of other programs not subjected to a splicing operation.

(8) Processing Procedure for Splicing Operation

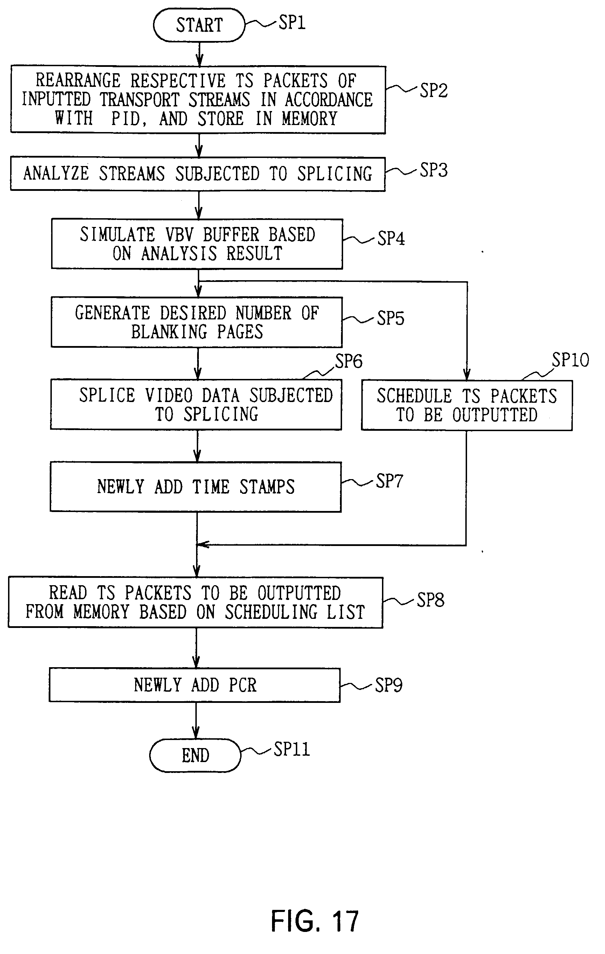

A processing procedure for performing the splicing operation on accordance with an embodiment of the invention will now be described making reference to the flow chart of Fig. 17. As illustrated in Fig. 17, the procedure begins at step SP1, and at step SP2, each of a plurality of TS packets of received input transport streams S10, S11 are rearranged in accordance with packet identification information PID by input processors 15A, 15B. The rearranged TS packets are then stored in memory 10 in the rearranged form in accordance with each packet identification information PID. Processing then proceeds to step SP3. At step SP3, parser unit 17 of splicing apparatus 1 parses the syntax of the two source video streams of video data to be subjected to a splicing operation, as specified by host computer 2. At next step SP4, buffer simulator unit 18 of splicing apparatus 1 analyzes the amount of code that would be generated in the VBV buffer when the video data to be subjected to splicing is input thereto, based on the parsing result from parser unit 17.

Upon completion of the above steps, the splicing apparatus 1 simultaneously proceeds to steps SP5 and SP10 to perform respective processing in parallel. At step SP5, CPU 7 determines how splicing processing should be performed on the source video stream to be subjected to splicing to generate splicing instructions based on the analysis result of buffer simulator 18. CPU 7 in turn controls blanking generator 20 to generate a required number of blanking pictures $D_{BLK}$ which are to be inserted at a splice point between two data streams to be spliced together, based on the splicing instruction.

At next step SP6, data link circuit 19 reads video streams DA and DB to be subjected to splicing from memory 10, and splices video data DA and DB while inserting the blanking picture $D_{BLK}$ and stuffing bits $D_{SF}$ as appropriate to produce spliced video stream DA+B. This linked video data is again transformed into TS packets and stored in memory 10. At next step SP7, time stamp regenerator 22 adds new time stamps to each of the TS packets positioned after the splice point such that the time stamps are continuous from before until after the splice point.

While steps SP5-SP7 are being performed, at step SP10, scheduler circuit 24 schedules the output timing for TS packets which are to be output from splicing apparatus 1. A scheduling list indicative of the output scheduling is created. Since splicing apparatus 1 multiplexes and outputs the TS packets of other video streams that have not been subject to a splicing operation, instead of only outputting the TS packets of the spliced video stream DAB, the output timing for all TS packets to be output are defined in the scheduling list.

At step SP8, output processor 23 reads TS packets specified by the scheduling list from memory 10 in the listed order, and outputs the read out TS packets at the specified timing. The scheduled output timing is based upon the scheduling list. An output transport stream $S_{OUT}$ is produced, and which includes TS packets of the spliced video stream DAB, and TS packets of the video data that have not been subject to a splicing operation, multiplexed therein.

At next step SP9, PCR regenerator 25 corrects the value of the program clock reference PCR such that new program clock reference PCR added to transport stream $S_{OUT}$ output from output processor 23 is completely continuous. Thus, a transport stream $S_{OUT}$ is produced and output. After the processing at step SP9 ends, splicing apparatus 1 returns to step SP1 to perform a further splicing operation, or to terminate operation.

Splicing apparatus 1 is adapted to perform a splicing operation through a sequence of processing including storage of input transport streams, parsing of data streams to be subjected to splicing, execution of an actual splicing operation without decoding and re-encoding the transported data, scheduling for TS packets to be output, and outputting of TS packets based on the scheduling.

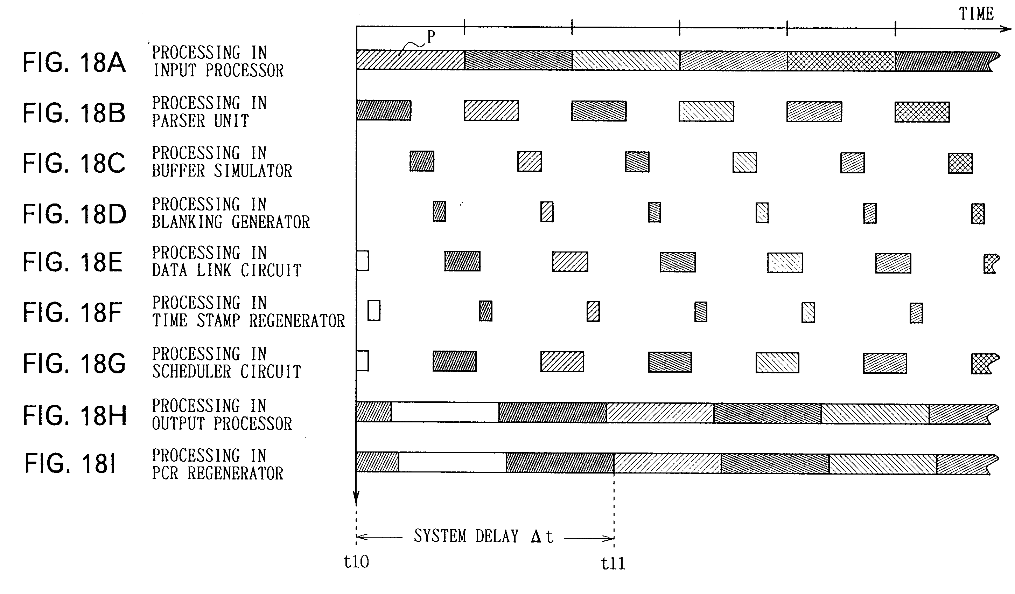

Figs. 18A to 18I illustrate timing charts for respective processing by the various described components of splicing apparatus 1. As illustrated in the aforementioned flow chart, in splicing apparatus 1, TS packets are output therefrom, in accordance with a sequence of processing performed in the respective components. For this reason, splicing apparatus 1 generates a system delay as shown in Figs. 18A to 18I. In Figs. 18A to 18I, same data belonging to a similar group is represented by the same hatching. As can be seen from the timing chart, data P, which is stored in the memory 10 by input processor 15A (or 15B) at time point t10, is output from the splicing apparatus 1 at time point t11, so that a system delay $f¢t$ (=t11-t10) exists. Therefore, delay correction circuit 98 in the output processor 23 offsets the value of the system time clock STC by this system delay $f¢t$. Thus, TS packets that are subjected to a splicing operation, and TS packets that are not subjected to a splicing operation are output from splicing apparatus 1 after a similar delay.

(9) Operation and Effects

In splicing apparatus 1 configured as described above in accordance with an embodiment of the invention, multi-program transport streams S10, S11, in which digital video data of a plurality of programs are multiplexed, are input to input processors 15A, 15B. Input processors 15A, 15B rearrange respective TS packets from transport streams S10, S11 in accordance with the packet identification information PID and store the rearranged TS packets in memory 10 according to each packet identification information PID, to reconfigure and group TS packets for each program.

For actually performing the splicing operation, parser unit 17 reads TS packets of video data to be subjected to the splicing operation, and parses a variety of syntax parameters added to the TS packets during compression encoding and packetization. Buffer simulator unit 18 receives the result of the parsing, and simulates how the VBV buffer on the receiver side would behave when data streams that are to be subjected to splicing are received.

CPU 7 receives the result of the simulation performed by buffer simulator unit 18, determines which appropriate data combination processing should be performed on the data streams to be subjected to splicing without causing the VBV buffer to overflow or underflow, and sends the determination result to data link circuit 19 as a splicing instruction.

Data link circuit 19 reads TS packets of the streams to be subjected to the splicing operation based on the data splicing instruction as received from CPU 7, and generates blanking pages $D_{BLK}$ and stuffing bytes $D_{SF}$ as appropriate. Data link circuit 19 performs a splicing operation by splicing the appropriate packets and data, and transforms the spliced data back into TS packets which are again stored in memory 10.

Scheduler circuit 24 schedules the output timing for the spliced TS packets based on the result of analysis performed by buffer simulator unit 18 and the contents of determination for data combination made by CPU 7. Scheduler circuit also schedules the output timing for TS packets of other streams not subjected to a splicing operation, if they are to be multiplexed and output together, with the spliced TS packets.

Output processor 23 reads TS packets from memory 10 to be output from splicing apparatus 1 based on a scheduling list as received from scheduler circuit 24, and outputs the TS packets at the specified output timing. This results in a transport stream $S_{OUT}$ which has multiplexed therein the spliced TS packets and the TS packets of the other data streams not subject to a splicing operation.

Splicing apparatus 1 demultiplexes and classifies the input transport streams S10, S11, and stores the individual data streams in the memory 10. Thereafter, memory 10 is commonly accessed by the respective components of splicing apparatus 1 to perform analysis of the streams, execution of a splicing operation, and outputting of spliced data streams, thereby making it possible to readily carry out the splicing operation even with video data which are packetized for transmission.

Also, in splicing apparatus 1, when respective TS packets of the transport streams S10, S11 are stored in memory 10, pointer information is added to each TS packet to point to positions at which associated information are contained within the packet. Accordingly, a desired portion in a TS packet can be easily accessed by referring to the appropriate pointer information. It is therefore possible to handle the TS packets as if they were in the format of elementary streams without the need for actually disassembling and decoding them into elementary streams.

Further, in splicing apparatus 1, when transport streams S10, S11 are stored in memory 10, an input time thereof is added to the transport streams. Therefore, if the transport streams S10, S11 are output at a delayed timing equal an inherent system delay from the input time, they can be properly output while preventing the VBV buffer from failing without the need for rescheduling the output thereof.

(10) Other Embodiments

While the foregoing embodiment has been described for the case where TS packets of a spliced stream are multiplexed with TS packets of other streams and the multiplexed transport stream is output, the present invention is not limited to this. Alternatively, the TS packets of the spliced stream only may be output.

Also, while in the foregoing embodiment, each of the components has been described as being an independent module, the present invention is not limited to this configuration, but some of the components may be collected and formed by a single module.

Further, in the foregoing embodiment, single memory 10 can be commonly accessed by the respective components through bus 9 in order to absorb processing times in the respective components. The present invention, however, is not limited to this configuration, and alternatively, a first in first out (FIFO) buffer may be provided between the respective components to absorb the processing times in the respective circuit blocks.

Further, in the foregoing embodiment, input transport streams are rearranged in accordance with the packet identification information PID and grouped and stored in memory 10 according to packet identification information PID to classify and rearrange the transport streams. The present invention is not limited to such a manner of classification. Alternatively, the input transport streams may be stored in memory in their received groupings or order, and be classified in accordance with pointer information based on the packet identification information PID.

Further, in the foregoing embodiment, when the input transport streams are demultiplexed, and the data for each stream is stored together, pointer information indicative of storage locations for a variety of information is added to each stream such that the streams are disassembled into pseudo elementary streams. The present invention, however, is not limited to such pseudo disassemble. Alternatively, the respective streams may be actually disassembled into elementary streams.

Further, while the foregoing embodiment has been described for parallel use of four tables TB1 to TB4 in the PID lookup tables 16A, 16B, the present invention is not limited to this particular number of tables. Any number of parallel tables may be used. In addition, the PID lookup table may be structured by direct mapping in accordance with a cache scheme, or N-way associative, by way of example.

Further, while the foregoing embodiment has been described for the case where an input time is registered in the scheduling list, the present invention is not limited to the registration of the output time in the scheduling list. Alternatively, the output time may be registered in each TS packet as part of additional information.

According to embodiments of the present invention as described above, respective encoded video data streams within an input transport stream are disassembled into respective pseudo original elementary streams and stored in storage means. The amount of code that will be generated in a receiver's VBV buffer for streams to be subject to splicing linkage in the plurality of elementary streams is analyzed, and the streams to be subjected to a splicing procedure are spliced together on the basis of the result of the analysis. A desired amount of data is inserted at a splice point between the two data streams to be spliced to produce a spliced video data stream. The spliced video stream is output in accordance with output timing determined on the basis of the amount of code to be generated for the spliced video data stream. It is thereby possible to readily carry out data connection processing even with video data which is packetized for transmission.

Although particular embodiments have been described herein, it will be appreciated that the invention is not limited thereto and that many modifications and additions thereto may be made within the scope of the invention. For example various combinations of the features of the following dependent claims can be made with the features of the independent claims without departing from the scope of the present invention.

Further, since certain changes may be made in carrying out the above method and in the constructions set forth without departing from the spirit and scope of the invention it is intended that all description shown in the accompanying drawings shall be interpreted as illustrative and not in a limiting sense.

It is also to be understood that the following claims are intended to cover all of the generic and specific features of the invention herein described and all statements of the scope of the invention which, as a matter of language, might be said to fall therebetween.

**Claims**

1. A video splicing apparatus for receiving a transport stream including a plurality of packetized encoded video data streams, and for splicing said encoded video data streams to generate a spliced video data stream, comprising:

   input processing means for disassembling each of said plurality of packetized encoded video data streams in said transport stream into a pseudo-elementary stream before packetization, and storing said disassembled pseudo-elementary streams in predetermined storage means;
   analysis means for analyzing the amount of coded bits of two data streams of said elementary streams stored in said storage means that would be generated upon decoding upon receipt of the two data streams to be subjected to a splicing operation;
   data processing means for reading said data streams to be subjected to said splicing operation from said storage means, splicing said streams, and inserting a desired amount of additional data at a splice point based on the result of the analysis by said analysis means to produce a spliced video data stream, and storing said spliced video data stream in said storage means; and
   output processing means for determining output timing for said spliced video data stream based on said amount of coded bits determined by said analysis means, and outputting said spliced video data stream read from said storage means based on said determined output timing.

2. The video splicing apparatus according to claim 1, wherein:

   said input processing means rearranges said respective encoded video data streams in accordance with packet identification information while adding pointer information to each of said encoded video data streams, and stores said encoded video data streams in said storage means to disassemble said respective encoded video data streams into said pseudo-elementary streams.

3. The video splicing apparatus according to claim 2, wherein:

   said input processing means comprises a plurality of tables having address information arranged in accordance with the packet identification information corresponding to storage locations of said storage means, and wherein said video splicing apparatus retrieves address information corresponding to packet identification information of an input data stream while referencing said plurality of tables in parallel, and rearranges said respective encoded video data streams in accordance with the packet identification information and stores the rearranged video data streams in said storage means based on said address information.

4. The video splicing apparatus according to any preceding claim, wherein:

   said data processing means inserts a desired number of blanking pictures and stuffing bits as said additional data such that a buffer in a decoder that will receive and decode the spliced data stream side does not overflow or underflow, based on the amount of data that would be generated in said decoder for each of said data streams subjected to the splicing operation.

5. The video splicing apparatus according to any preceding claim, wherein:

   said analysis means analyzes at least two or more video data streams to be subjected to splicing in a time division manner.

6. The video splicing apparatus according to any preceding claim, wherein:

   said output processing means further includes time stamp adding means for adding new time stamps such that said time stamps are continuous before and after said splice point in said spliced video data stream.

7. The video splicing apparatus according to any preceding claim, wherein:

   said output processing means further includes program clock reference correcting means for correcting a program clock reference in said output spliced video data stream.

8. The video splicing apparatus according to claim 7, wherein:

said program clock reference correcting means corrects said program clock reference based on a difference in time between said output timing after splicing and an output timing that would be used if the data had not been spliced.

9. The video splicing apparatus according to any preceding claim, wherein:

said input processing means stores an input time at which each packet of said respective encoded video data streams was input associated with each packet of said encoded data streams.

10. The video splicing apparatus according to claim 9, wherein:

when said encoded video data streams not subjected to a splicing operation are output together with said spliced video data stream, said output processing means specifies output timing for said encoded video data stream not subjected to the splicing operation, said output timing being related to said input time.

11. A video splicing method for receiving a transport stream including a plurality of packetized encoded video data streams, and for splicing said encoded video data streams to generate a spliced video data stream, comprising the steps of:

disassembling each of said plurality of packetized encoded video data streams in said transport stream into a pseudo-elementary stream before packetization;

storing said disassembled pseudo-elementary streams;

analyzing the amount of coded bits of two of said pseudo-elementary streams that would be generated upon decoding upon receipt of the two data streams to be subjected to a splicing operation;

reading said data streams to be subjected to the splicing operation;

splicing said data streams;

inserting a desired amount of additional data at a splice point based on the result of said analysis to produce a spliced video data stream,

storing said spliced video data stream;

determining output timing for said spliced video data stream based on said determined amount of coded bits; and

outputting said spliced video data stream based on said determined output timing.

12. The video splicing method according to claim 11, wherein:

said respective encoded video data streams are rearranged in accordance with packet identification information while adding pointer information to each of said encoded video data streams, and said encoded video data streams are disassembled into-pseudo elementary streams and are stored.

13. The video splicing method according to claim 12, further comprising the steps of:

providing a plurality of tables having address information corresponding to storage locations of said encoded video data streams arranged in accordance with the packet identification information;
retrieving address information while referencing said plurality of tables in parallel;
rearranging said respective encoded video data streams in accordance with the packet identification information and
storing the rearranged video data streams based on said address information.

14. The video splicing method according to any of claims 11 to 13, further comprising the step of:

inserting a desired number of blanking pages and stuffing data such that a buffer in a decoder that will receive and decode the spliced data stream side does not overflow or underflow, based on the amount of data that would be generated in said decoder for said data streams subjected to the splicing operation.

15. The video splicing method according to any of claims 11 to 14, further comprising the step of:

analyzing at least two or more video data streams to be subjected to splicing in a time division manner.

**16.** The video splicing method according to any of claims 11 to 15, further comprising the step of:

adding new time stamps to said spliced video data stream such that said time stamps are continuous before and after said splice point in said spliced video data stream.

**17.** The video splicing method according to any of claims 11 to 16, further comprising the step of:

correcting a program clock reference in said output spliced video data stream.

**18.** The video splicing method according to claim 17, wherein: said program clock reference correcting step corrects said program clock reference based on a difference in time between said output timing after splicing and an output timing that would be used if the data had not been spliced.

**19.** The video splicing method according to any of claims 11 to 18, further comprising the step of:

storing an input time at which each packet of said respective encoded video data streams was input associated with each packet of said encoded data streams.

**20.** The video splicing method according to claim 19, wherein:

when said encoded video data streams not subjected to a splicing operation are output together with said spliced video data stream, output timing for said encoded video data stream not subjected to splicing is specified in accordance with said input time.

**21.** A splicing apparatus for splicing together a first coded video stream and a second coded video stream, comprising;

parser means for parsing a syntax of said first coded video stream and a syntax of said second coded video stream;
splice means for splicing said first coded video stream and said second coded video stream at a splicing point to generate a spliced video stream; and
control means for generating a splicing instruction to be supplied to said splice means in accordance with a command from said parser means for controlling said splice means based on said splicing instruction so as to insert dummy bits between said first coded video stream and said second coded video stream in said spliced video stream so that a coding buffer which stores said spliced video stream does not overflow or underflow.

**22.** The splicing apparatus according to claim 21, wherein:

said parser means simulates a bit occupancy value of a codec buffer holding said first coded stream and a bit occupancy of a codec buffer holding said second coded stream based on the result from said parsing means.

**23.** The splicing apparatus according to claim 22, wherein:

said control means controls said splice means so that said bit occupancy value of said codec buffer holding said spliced video data stream equals said bit occupancy value of said codec buffer holding said second coded stream.

**24.** The splicing apparatus according to claim 23 wherein:

said dummy data comprises at least one of a blanking picture and stuffing bits.

**25.** The splicing apparatus according to claim 24, wherein:

said control means calculates a number of said blanking pictures and amount of said stuffing bits based on a bit occupancy value of a last picture of said first stream and a bit occupancy value of a first picture of said second stream.

**26.** The splicing apparatus according to claim 25, wherein:

said splice means inserts said blanking pictures in order to increase the bit occupancy value of said codec buffer holding said spliced video stream, and stuffs said stuffing bits in order to decrease the bit occupancy value of said codec buffer holding said spliced video stream.

**27.** The splicing apparatus according to claim 26, wherein:

said control means determines the amount of stuffing bits to be stuffed after the number of said blanking pictures is determined.

**28.** The splicing apparatus according to claim 22, wherein:

said control means controls said splice means so that variations in the occupancy value of the codec buffer holding said spliced video stream agree with variations of said occupancy value of said codec buffer holding said second coded stream.

29. The splicing apparatus according to claim 21, wherein:

said control means revises time stamps of said spliced video stream so that said time stamps of said second coded video stream within said spliced video stream are continuous from time stamps of first coded video stream within said spliced video stream.

30. The splicing apparatus according to claim 21, further comprising: memory means for storing said first coded stream and said second coded stream; wherein said control means adds pointer information to first and second coded streams, wherein said pointer information indicates memory address of codec parameters of said first and second coded streams stored in said memory means, and wherein said splicing instruction is generated based on said codec parameters which are read out from said memory means by using said pointer information.

31. A splicing apparatus for splicing together a first coded video stream and a second coded video stream, comprising;

parser means for parsing a syntax of said first coded video stream and a syntax of said second coded video stream,
splice means for switching said first coded video stream and said second coded video stream at a splicing point to generate a spliced video stream;
control means for controlling said splice means to insert a number of dummy bits between said first coded video stream and said second coded video stream in said spliced video stream so that a buffer occupancy of a buffer holding said second coded video stream in said spliced video stream matches a buffer occupancy of said second coded video stream that would be generated if said second coded video stream were not spliced to said first coded video stream.

32. A splicing apparatus for splicing a first coded video stream and a second coded video stream, comprising:

parser means for parsing a syntax of said first coded video stream and a syntax of said second coded video stream;
splice means for switching said first coded video stream and said second coded video stream at a splicing point to generate a spliced video stream;
control means for controlling said splice means so that variations in a buffer occupancy of the second coded video stream in said spliced video stream agree with variations of a buffer occupancy that would be present as a result of an original second coded video stream supplied to said splicing apparatus if said second coded video stream were not subjected to the splicing operation.

FIG. 1A
(RELATED ART)

FIG. 1B
(RELATED ART)

FIG. 1C
(RELATED ART)

FIG. 1D
(RELATED ART)

GOP ⟵⟶ GOP ⟵⟶ GOP

VIDEO DATA

ENCODED VIDEO DATA

PES HEADER

PES PACKET

DISASSEMBLE

TS PACKET

EP 0 942 603 A2

PES PACKET | PES HEADER | ACTUAL DATA FIELD

| PACKET START CODE | STREAM ID | PACKET LENGTH | "10" | FLAG CONTROL | PES HEADER LENGTH | CONDITIONAL CODING | | | |
|---|---|---|---|---|---|---|---|---|---|
| | | | | | | PTS | DTS | OTHERS | STAFFING BYTES |
| 24bit | 8 | 16 | 2 | 14 | 8 | | | 8×N | |

# FIG. 2 (RELATED ART)

EP 0 942 603 A2

FIG. 3 (RELATED ART)

FIG. 4A
(RELATED ART)

FIG. 4B
(RELATED ART)

FIG. 4C
(RELATED ART)

24

FIG. 5A
(RELATED  ART)

FIG. 5B
(RELATED  ART)

FIG. 5C
(RELATED  ART)

S1

S2

S3

1/30

t1

m    n

t2

FIG. 6

EP 0 942 603 A2

FIG. 7A  Da

FIG. 7B  Db

FIG. 7C  Dab

SPLICE POINT

1/30

FIG. 8A  $D_A$

FIG. 8B  $D_B$

FIG. 8C  $D_{A+B}$

FIG. 8D  $D_{AB}$

SPLICE POINT

$D_{A2}$  $D_{A1}$

$D_{B1}$  $D_{B2}$

$D_{A1}$  $D_{B1}$

BLANKING AND STUFFING DATA

$D_{A2}$  $D_{A+B}$  $D_{B2}$

FIG. 9

ADDITIONAL INFORMATION(64 BYTES)　　TS PACKET(188 BYTES)　ADDITIONAL INFORMATION(4 BYTES)

| | | P I D | ADAPTATION FIELD | PAYLOAD | reserved |
|---|---|---|---|---|---|

| abs_sum_bgn | reserved | abs_sum_end | reserved | payload length | payload ptr | PCR ptr | PES pyld ptr | PES pckt lngt ptr | PES hdr lngt ptr | splc cntdwn ptr | splice countdown | PTS ptr | DTS ptr | AU ptr | prev_PCR | prev_SPCD | reserved | input_STC | PCR | reserved |
|---|---|---|---|---|---|---|---|---|---|---|---|---|---|---|---|---|---|---|---|---|

## FIG. 10

EP 0 942 603 A2

FIG. 11

EP 0 942 603 A2

TB1
TB2
TB3
TB4

| #1 PID VAL |
| #1 W_p |
| #1 Inf |
| #1 Inf |

| #2 PID VAL |
| #2 W_p |
| #2 Inf |
| #2 Inf |

| #3 PID VAL |
| #3 W_p |
| #3 Inf |
| #3 Inf |

| #4 PID VAL |
| #4 W_ptr |
| #4 Information 1 |
| #4 Information 2 |

| #1 Inf |
| #5 PID |
| #5 W_p |
| #5 Inf |
| #5 Inf |

| #2 Inf |
| #6 PID |
| #6 W_p |
| #6 Inf |
| #6 Inf |

| #3 Inf |
| #7 PID |
| #7 W_p |
| #7 Inf |
| #7 Inf |

| #4 Information m |
| #8 PID VAL |
| #8 W_prt |
| #8 Information 1 |
| #8 Information 2 |

| #5 Inf |
| #9 PID |
| #9 W_p |
| #9 Inf |
| #9 Inf |

| #6 Inf |
| #10 PID |
| #10 W_p |
| #10 Inf |
| #10 Inf |

| #7 Inf |
| #11 PID |
| #11 W_p |
| #11 Inf |
| #11 Inf |

| #8 Information m |
| #12 PID VAL |
| #12 W_prt |
| #12 Information 1 |
| #12 Information 2 |

| #9 Inf |
| #n-3 P |
| #n-3 W |
| #n-3 In |
| #n-3 In |

| #10 Inf |
| #n-2 P |
| #n-2 W |
| #n-2 In |
| #n-2 In |

| #11 Inf |
| #n-1 P |
| #n-1 W |
| #n-1 In |
| #n-1 In |

| #12 Information m |
| #n PID VAL |
| #n W_ptr |
| #n Information 1 |
| #n Information 2 |

| #n-3 In |
| #n-2 In |
| #n-3 In |
| #n Information m |

FIG. 12

32

FIG. 13

FIG. 14

FIG. 15

EP 0 942 603 A2

FIG. 16

EP 0 942 603 A2

START — SP1

REARRANGE RESPECTIVE TS PACKETS OF INPUTTED TRANSPORT STREAMS IN ACCORDANCE WITH PID, AND STORE IN MEMORY — SP2

ANALYZE STREAMS SUBJECTED TO SPLICING — SP3

SIMULATE VBV BUFFER BASED ON ANALYSIS RESULT — SP4

GENERATE DESIRED NUMBER OF BLANKING PAGES — SP5

SPLICE VIDEO DATA SUBJECTED TO SPLICING — SP6

SCHEDULE TS PACKETS TO BE OUTPUTTED — SP10

NEWLY ADD TIME STAMPS — SP7

READ TS PACKETS TO BE OUTPUTTED FROM MEMORY BASED ON SCHEDULING LIST — SP8

NEWLY ADD PCR — SP9

END — SP11

# FIG. 17

TIME

FIG. 18A    PROCESSING IN
            INPUT PROCESSOR

FIG. 18B    PROCESSING IN
            PARSER UNIT

FIG. 18C    PROCESSING IN
            BUFFER SIMULATOR

FIG. 18D    PROCESSING IN
            BLANKING GENERATOR

FIG. 18E    PROCESSING IN
            DATA LINK CIRCUIT

FIG. 18F    PROCESSING IN
            TIME STAMP REGENERATOR

FIG. 18G    PROCESSING IN
            SCHEDULER CIRCUIT

FIG. 18H    PROCESSING IN
            OUTPUT PROCESSOR

FIG. 18I    PROCESSING IN
            PCR REGENERATOR

SYSTEM DELAY Δt

t10            t11

EP 0 942 603 A2

FIG. 19

START

CALCULATE V(t(x))
t(x)=t1,t2,t3····· ~ST1

ST2

V(t(x))>V(n)  YES

NO

PICTURE t(x) IS
BLANKING PICTURE ~ST3

x=x+1 ~ST4

PICTURE t(x) IS
PICTURE n ~ST5

CALCULATE G(SF) ~ST6

MAKE A SPLICING
INSTRUCTION ~ST7

END ~ST8

FIG. 20